# EUROPÄISCHE PATENTSCHRIFT

(11) **EP 3 230 698 B1**
(45) Veröffentlichungstag und Bekanntmachung des Hinweises auf die Patenterteilung: **22.04.2020**
(21) Anmeldenummer: 15788419.8
(22) Anmeldetag: 03.11.2015
(51) Int. Cl.: G01F 15/00, F15D 1/00, G01F 1/84, G01F 25/00

(54) **MESSAUFNEHMER VOM VIBRATIONSTYP SOWIE DAMIT GEBILDETES MESSSYSTEM**
MEASURING TRANSDUCER OF THE VIBRATION TYPE AND MEASUREMENT SYSTEM FORMED THEREWITH
CAPTEUR VIBRATOIRE ET SYSTÈME DE MESURE FORMÉ AVEC CELUI-CI

(30) Priorität: 10.12.2014 DE 102014118367
(43) Veröffentlichungstag der Anmeldung: 18.10.2017
(73) Patentinhaber: Endress+Hauser Flowtec AG, 4153 Reinach (CH)
(72) Erfinder: ZHU, Hao, 85354 Freising (DE); RIEDER, Alfred, 84032 Landshut (DE); DRAHM, Wolfgang, 85435 Erding (DE); KIRST, Michael, 79539 Lörrach (DE)
(74) Vertreter: Andres, Angelika Maria
(86) Internationale Anmeldenummer: PCT/EP2015/075531
(87) Internationale Veröffentlichungsnummer: WO 2016/091478

(56) Entgegenhaltungen:
- EP-A1- 2 159 552
- EP-A1- 2 485 020
- DE-A1- 3 102 167
- DE-A1-102010 039 627
- US-A1- 2011 167 907
- US-A1- 2012 255 370

## Beschreibung

Die Erfindung betrifft einen dem Erzeugen von von wenigstens einer physikalischen Meßgröße - beispielsweise nämlich einer Dichte und/oder einer Massendurchflußrate und/oder einer Viskosität - eines in einer Rohrleitung strömenden Fluids abhängigen Reaktionskräften - beispielsweise nämlich Dichte abhängigen Trägheitskräften und/oder Massendurchflußrate abhängigen Corioliskräften und/oder Viskosität abhängigen Reibungskräften - dienlichen Meßaufnehmer vom Vibrationstyp. Zudem betrifft die Erfindung auch ein mittels eines solchen Meßaufnehmer gebildetes Meßsystem.

In der US-A 2012/0192658, der US-A 2011/0146416, der US-A 2011/0167907, der US-A 2011/0265580 bzw. der US-A 2014/0000374 sind jeweils Meßaufnehmer vom Vibrationstyp beschrieben, die jeweils dafür eingerichtet, sind von einer physikalischen Meßgröße - beispielsweise einer Dichte und/oder einer Massendurchflußrate und/oder einer Viskosität - eines in einer Rohrleitung strömenden Fluids abhängigen Reaktionskräften - beispielsweise Dichte abhängigen Trägheitskräften und/oder Massendurchflußrate abhängigen Corioliskräften und/oder Viskosität abhängigen Reibungskräften - zu erzeugen bzw. die dafür vorgesehen sind, als ein Bestandteil eines dem Messen nämlicher Meßgröße dienenden vibronischen Meßgeräts verwendet zu werden. Jeder der gezeigten Meßaufnehmer umfaßt jeweils eine Rohranordnung mit vier Meßrohren zum Führen von strömendem Fluid sowie zwei voneinander beabstandete, jeweils eine röhrenförmige, nämlich jeweils zum Führen von ein- und wieder ausströmendem Fluid eingerichtete Kammer aufweisenden Strömungsteiler, an die jeweils jedes der Meßrohre unter Bildung strömungstechnisch parallel geschalteter Strömungspfade angeschlossen ist, wobei jede der Kammern jeweils einen Kammerboden, in den genau vier voneinander beabstandet in ein Lumen nämlicher Kammer mündende Strömungsöffnungen eingeformt sind, aufweist und jedes der jeweils vier Meßrohre jeweils mit einem jeweiligen einlaßseitigen ersten Meßrohrende in eine der Strömungsöffnungen des jeweiligen ersten Strömungsteilers, mithin dessen jeweiliges Lumen und mit einem jeweiligen auslaßseitigen zweiten Meßrohrende in eine der Strömungsöffnungen des jeweiligen zweiten Strömungsteilers, mithin dessen Lumen mündet. Die vier Meßrohre sind jeweils zumindest abschnittsweise gerade und/oder zumindest abschnittsweise gebogen, beispielsweise in Form eines "U" oder eines "V", ausgebildet sein, beispielsweise auch derart, daß sie, wie in der US-A 2011/0146416 gezeigt, jeweils über eine gesamte Meßrohlänge hinweg gerade sind. Zudem können die Meßrohre so geformt und angeordnet sein, daß die jeweils gebildete Rohranordnung wenigstens zwei zueinander senkrechte gedachte Symmetrieebenen aufweist, bezüglich welcher Symmetrieebenen die Rohranordnung jeweils spiegelsymmetrisch ist.

Jeder der Meßaufnehmer weist zudem jeweils eine dem Anregen mechanischer Schwingungen der Meßrohre dienende elektromechanische Erregeranordnung sowie eine sowohl dem Erfassen von Schwingungsbewegungen der Meßrohre als auch dem Generieren von wenigstens einem Schwingungen der Meßrohre repräsentierenden Schwingungsmeßsignals dienende Sensoranordnung auf.

Die vorbezeichneten zwei Strömungsteiler jedes der Meßaufnehmer können jeweils auch integraler Bestandteil eines jeweiligen, nämlich jeweils eine Kavität mit darin plazierter Rohr-, Erreger- sowie die Sensoranordnung aufweisenden Aufnehmer-Gehäuses sein, derart, daß ein erstes Gehäuseende nämlichen Aufnehmer-Gehäuses mittels des jeweiligen ersten Strömungsteilers und ein zweites Gehäuseende nämlichen Aufnehmer-Gehäuses mittels des jeweiligen zweiten Strömungsteilers gebildet sind und daß das Aufnehmer-Gehäuses eine die jeweilige Kavität seitlich begrenzende Seitenwand aufweist, die sowohl am ersten Strömungsteiler als auch am zweiten Strömungsteiler fixiert ist.

Desweiteren kann jeder der gezeigten Meßaufnehmer ferner zwecks Bildung eines dem Messen wenigstens einer Meßgröße, beispielsweise nämlich eines der Strömungsparameter Massendurchflußrate und Volumendurchflußrate oder eines der Stoffparameter Dichte und Viskosität, eines in einer Rohrleitung strömenden Fluids dienen vibronischen Meßsystems, beispielsweise inform eines In-Line-Meßgeräts in Kompaktbauweise, jeweils zudem an eine zugehörige, dem Ansteuern der Erregeranordnung sowie der Verarbeitung des wenigstens einen von der Sensoranordnung gelieferten Schwingungsmeßsignals, insb. nämlich der Ermitttlung von Meßwerten für die wenigstens eine Meßgröße unter Verwendung des wenigstens einen Schwingungsmeßsignals, dienenden Meß- und Betriebselektronik elektrisch angeschlossen sein.

Wie in der eingangs erwähnten US-A 2012/0192658 erörtert, kann eine Meßgenauigkeit eines solchen mittels eines Meßwandlers der vorbezeichneten Art gebildeten Meßsystems, nämlich eine Genauigkeit mit der die mittels des Meßsystem für die wenigstens eine Meßgröße generierten Meßwerte mit nämlicher Meßgröße übereinstimmen, dadurch optimiert werden, daß Geometrie und Oberflächeneigenschaften der Messrohre so gewählt sind, dass ein Strömungswiderstand aller vier Messrohre identisch ist. Nämliche Bedingung ist bei den in der US-A 2011/0146416, der US-A 2011/0167907, der US-A 2011/0265580 bzw. der US-A 2014/0000374 gezeigten, nämlich jeweils mittels vier baugleichen Meßrohren gebildeten sowie bezüglich dreier zueinander orthogonaler gedachter Symmetrieebenen jeweils spiegelsymmetrischen Rohranordnungen auch über einen vergleichsweise weiten Meß- bzw. Betriebsbereich naturgemäß erfüllt. Bei mittels vier lediglich paarweise baugleichen gekrümmten, beispielsweise auch U- bzw. V-förmigen, Meßrohren gebildeten, gleichwohl bezüglich lediglich zweier zueinander orthogonaler gedachter Symmetrieebenen jeweils spiegelsymmetrischen Rohranordnungen wiederum können im vorbezeichneten Sinne identische Strömungswiderstände gemäß der US-A 2012/0192658 für einen bestimmten Betriebs- bzw. Arbeitspunkt erreicht werden, indem alle vier Meßrohre jeweils gleiche Oberflächeneigenschaften aufweisen und zudem zumindest von gleicher Meßrohrlänge und von gleichem Kaliber sind.

Wenngleich durch Verwenden von vier gemäß einer der vorbezeichneten Prinzipien ausgestalten und angeordneten Meßrohren für bestimmte Meß- bzw. Betriebsbereiche durchaus akzeptable Meßgenauigkeiten erreicht werden können, hat sich für bestimmte Anwendungen dennoch gezeigt, daß in erheblichem Maße verringerte Meßgenauigkeiten zu beobachten sein können; dies nicht zuletzt auch bei solchen Anwendungen, in denen die wenigstens eine Meßgröße eines mit einer vergleichsweise hohen Massendurchflußrate von einigen Tausend Tonnen pro Stunde strömenden Fluids und/oder eines strömenden Fluids mit einer stark schwankenden, nämlich über einen weiten Bereich und/oder sehr rasch zeitlich ändernder Reynoldszahl zu ermitteln ist, wobei mittels eines gemäß der US-A 2012/0192658 ausgestalteten Meßaufnehmers gebildete Meßsystem eine im Vergleich zu der US-A 2011/0146416, der US-A 2011/0167907, der US-A 2011/0265580 bzw. der US-A 2014/0000374 gezeigten Meßsystemen tendenziell eine in höherem Maße anfällige Meßgenauigkeit aufweisen können.

Die DE 10 2010 039627 A1 beschreibt einen Messaufnehmer vom Vibrationstyp mit vier Messrohren und jeweils anström- und abströmseitig einem Strömungsteiler, bei dem jeweils eine einstufige Strömungskonditionierung durch eine Kammer gegeben ist, von der alle vier Messrohre abzweigen bzw. in welche alle vier Messrohre münden.

Ausgehend vom vorbezeichneten Stand der Technik bzw. dessen Nachteilen besteht eine Aufgabe der Erfindung darin, Meßaufnehmer der in Rede stehenden Art dahingehend zu verbessern, daß damit gebildet Meßsysteme auch bei hohen Massendurchflußraten und/oder bei stark schwankender Reynoldszahl jeweils eine ausreichend hohe Meßgenauigkeit aufweisen können.

Zur Lösung der Aufgabe besteht die Erfindung in einem Meßaufnehmer vom Vibrationstyp gemäß dem vorliegenden unabhängigen Patentanspruch 1. Weiterbildungen der Erfindung sind in den abhängigen Ansprüchen spezifiziert.

Ein Grundgedanke der Erfindung besteht darin, eine dem jeweiligen Meßaufnehmer zugeführte Strömung nicht, wie bei herkömmlichen Meßaufnehmern der in Rede stehenden Art üblich, einlaßseitig abrupt auf die mittels der vier Meßrohre gebildeten Strömungspfade aufzuteilen bzw. auslaßseitig die vier so gebildeten Teilströmungen gleichermaßen abrupt wieder zusammenzuführen, sondern dies vielmehr auf zwei strömungstechnisch seriell geschaltete Aufteilungs- bzw. Zusammenführungsstufen auszuweiten, um dadurch eine verbesserte Konditionierung der Strömung innerhalb des jeweiligen Meßaufnehmers, nämlich eine möglichst gleichmäßige bzw. zeitlich möglichst wenig schwankende Aufteilung der Strömung auf die mittels der vier Meßrohre gebildeten Strömungspfade zu erzielen. Ein weiterer Vorteil der Erfindung ist ferner auch darin zu sehen, daß dadurch ein durch den Meßaufnehmer provozierter Druckverlust, gemessen bzw. berechnet, beispielsweise gemäß der bekannten *Darcy-Weisbach*-Gleichung, als eine Druckdifferenz zwischen einem in der Strömung vor dem ersten Strömungsteiler herrschenden Eingangsdruck und einem in der Strömung nach dem zweiten Strömungsteiler herrschenden Ausgangsdruck weiter verringert werden kann.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:
- Fig. 1: in einer perspektivischen Seitenansicht eine Variante eines, beispielsweise als Coriolis-Massedurchfluß- und/oder Dichte-Meßgerät ausgebildetes, vibronisches Meßsystems zum Messen wenigstens einer Meßgröße eines strömenden Fluids;
- Fig. 2: in einer ersten perspektivischen Seitenansicht einen für ein Meßsystem gemäß Fig. 1 geeigneten Meßaufnehmer vom Vibrationstyp;
- Fig. 3a, b: ein Meßsystem gemäß Fig. 1 in einer ersten bzw. zweiten ebenen Seitenansicht;
- Fig. 4: teilweise geschnitten den Meßaufnehmer gemäß Fig. 2 in einer zweiten perspektivischen Seitenansicht;
- Fig. 5: teilweise geschnitten den Meßaufnehmer gemäß Fig. 2 in einer ersten ebenen Seitenansicht;
- Fig. 6: in einer perspektivischen Seitenansicht eine für einen Meßaufnehmer gemäß Fig. 2 geeignete Rohranordnung;
- Fig. 7: in einer ersten ebenen, geschnittenen Seitenansicht Varianten für einen Meßaufnehmer gemäß Fig. 2 geeignete Strömungsteiler;
- Fig. 8: in einer ebenen, geschnittenen Seitenansicht weitere Varianten für einen Meßaufnehmer gemäß Fig. 2 geeignete Strömungsteiler;
- Fig. 9: in einer perspektivischen Seitenansicht eine weitere Variante eines, beispielsweise als Coriolis-Massedurchfluß- und/oder Dichte-Meßgerät ausgebildetes, vibronisches Meßsystems zum Messen wenigstens einer Meßgröße eines strömenden Fluids;

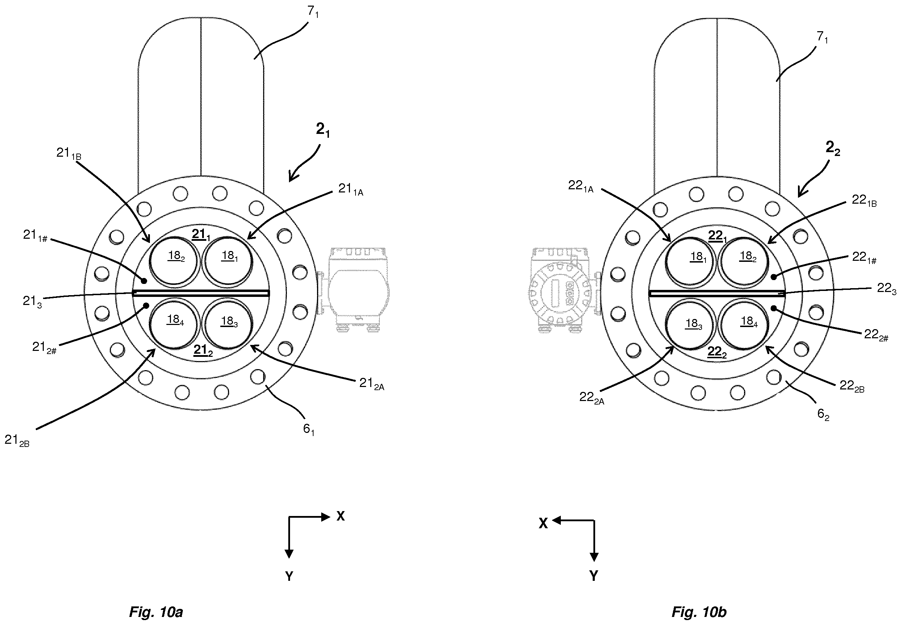

- Fig. 10a, b: ein Meßsystem gemäß Fig. 9 in einer ersten bzw. zweiten ebenen Seitenansicht;
- Fig. 11: in einer ersten perspektivischen Seitenansicht einen für ein Meßsystem gemäß Fig. 9 geeigneten Meßaufnehmer vom Vibrationstyp;
- Fig. 12a, b: teilweise geschnitten den Meßaufnehmer gemäß Fig. 11 in einer ersten bzw. zweiten ebenen Seitenansicht;
- Fig. 13: in einer perspektivischen Seitenansicht eine andere Variante eines, beispielsweise als Coriolis-Massedurchfluß- und/oder Dichte-Meßgerät ausgebildetes, vibronisches Meßsystems zum Messen wenigstens einer Meßgröße eines strömenden Fluids;

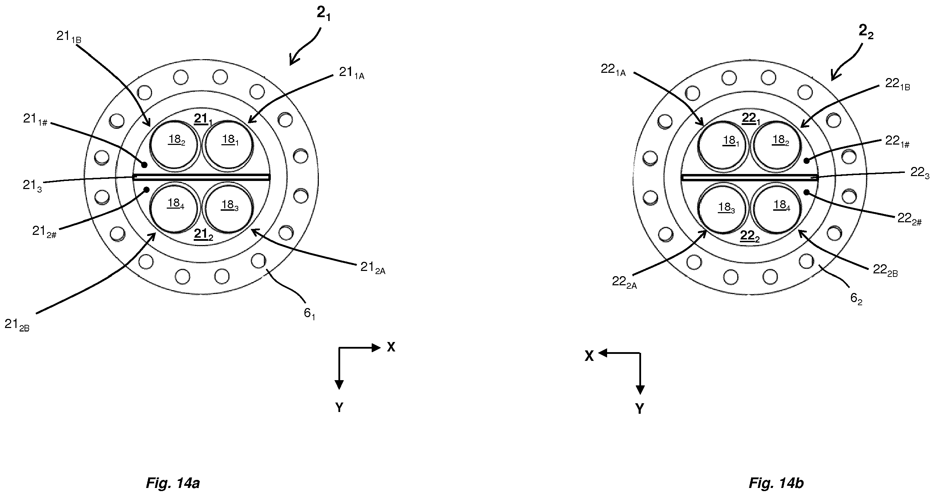

- Fig. 14a, b: ein Meßsystem gemäß Fig. 13 in einer ersten bzw. zweiten ebenen Seitenansicht;
- Fig. 15: in einer ersten perspektivischen Seitenansicht einen für ein Meßsystem gemäß Fig. 13 geeigneten Meßaufnehmer vom Vibrationstyp;

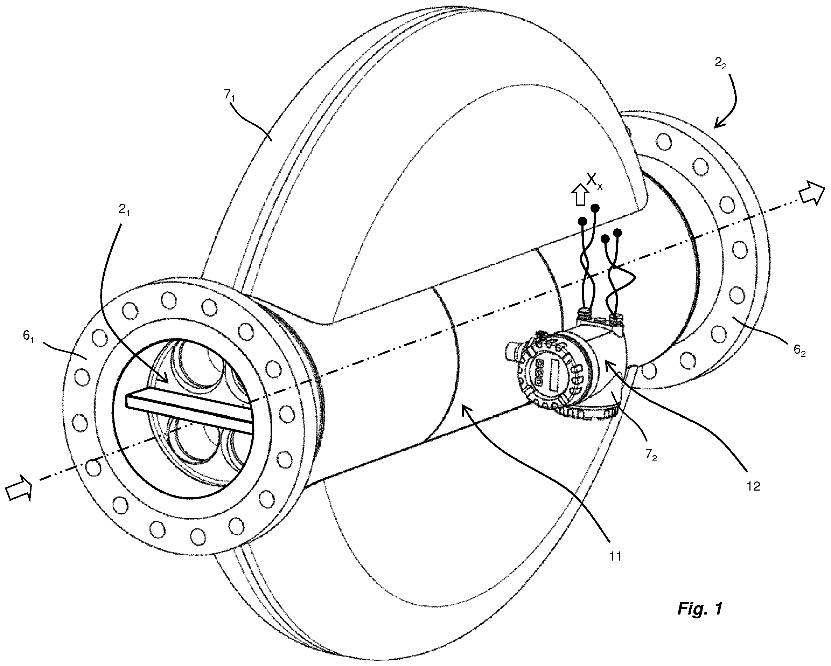

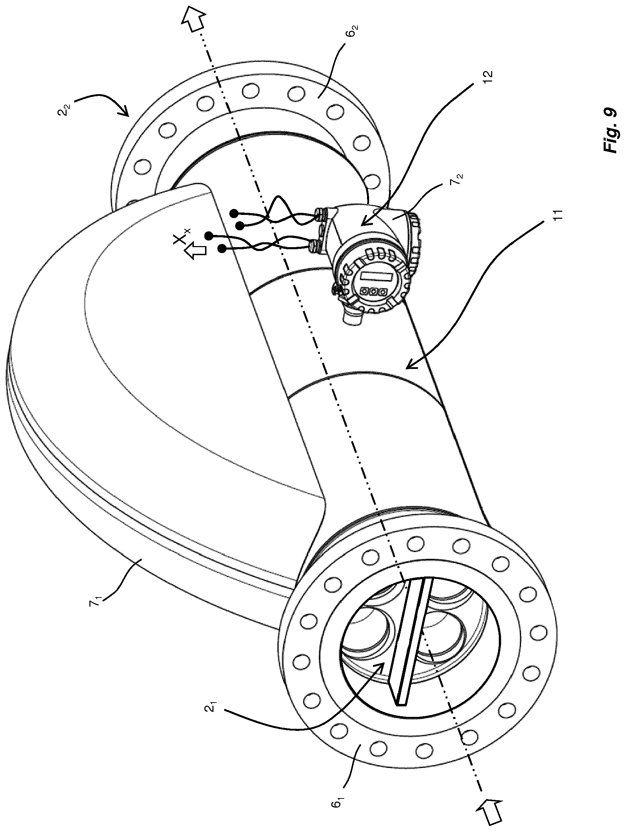

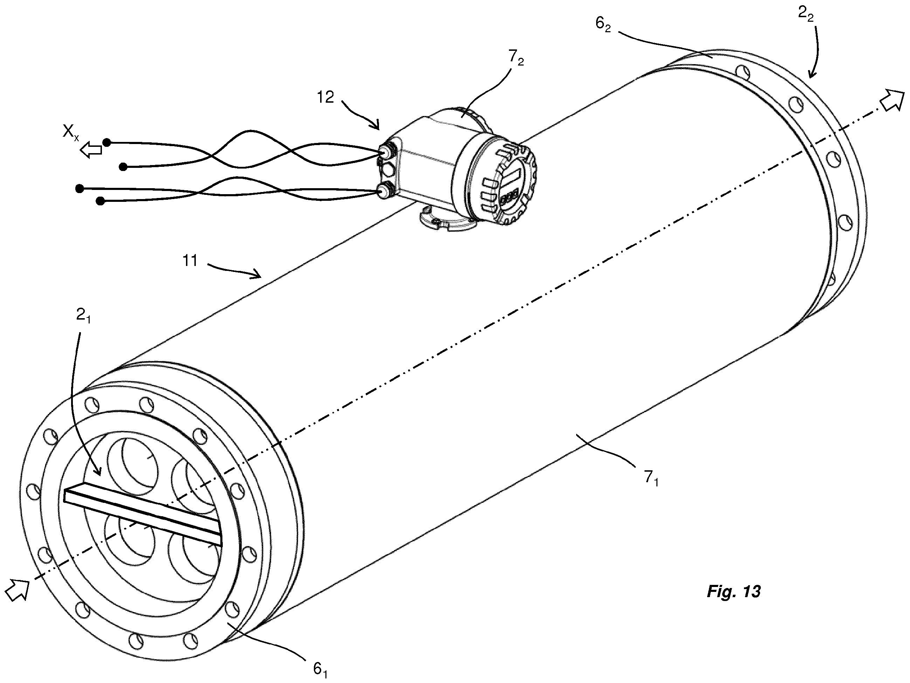

In der Fig. 1, 9 und 13 ist beispielhaft jeweils ein, beispielsweise als Coriolis-Massedurchfluß- und/oder Dichte-Meßgerät ausgebildetes, vibronisches Meßsystem zum Messen wenigstens einer physikalischen Meßgröße x eines in einer - aus Übersichtlichkeitsgründen hier nicht dargestellten - Rohrleitung strömenden Fluids schematisch dargestellt. Fluid kann hierbei praktisch jeder fließfähige Meßstoff, beispielsweise nämlich eine Flüssigkeit, ein Gase oder eine Dispersion, sein. Im besonderen dient jedes der Meßsysteme jeweils dazu, als wenigstens eine Meßgröße eine Massendurchflußrate ṁ eines in der vorbezeichneten Rohrleitung strömenden Fluids zu messen, insb. nämlich zu erfassen und in nämliche Massendurchflußrate ṁ repräsentierende, beispielsweise digitale, Massendurchfluß-Meßwerte Xₘ abzubilden und als gültige Meßwerte Xₓ (Xₘ → Xₓ) des Meßsystems auszugeben. Alternativ oder in Ergänzung kann das jeweilige Meßsystem ggf. auch dazu verwendet werden eine Dichte ρ und/oder eine Viskosität η nämlichen Fluids zu messen, mithin entsprechende, ggf. auch digitale Dichte-Meßwerte X_{ρ} bzw. Viskosität-Meßwerte X_{η} zu generieren und ggf. auch als gültige Meßwerte des Meßsystem auszugeben (X_{ρ} → Xₓ; X_{η} → Xₓ). Im besonderen ist das Meßsystem ferner dafür vorgesehen, Fluid, wie z.B. Erdöl, Erdgas oder einen anderen petrochemischen Meßstoff, zu messen, das in einer Rohrleitung mit einem Kaliber von mehr als 250 mm und/oder mit einer Massendurchflußrate von mehr als 1000 t/h strömen gelassen ist.

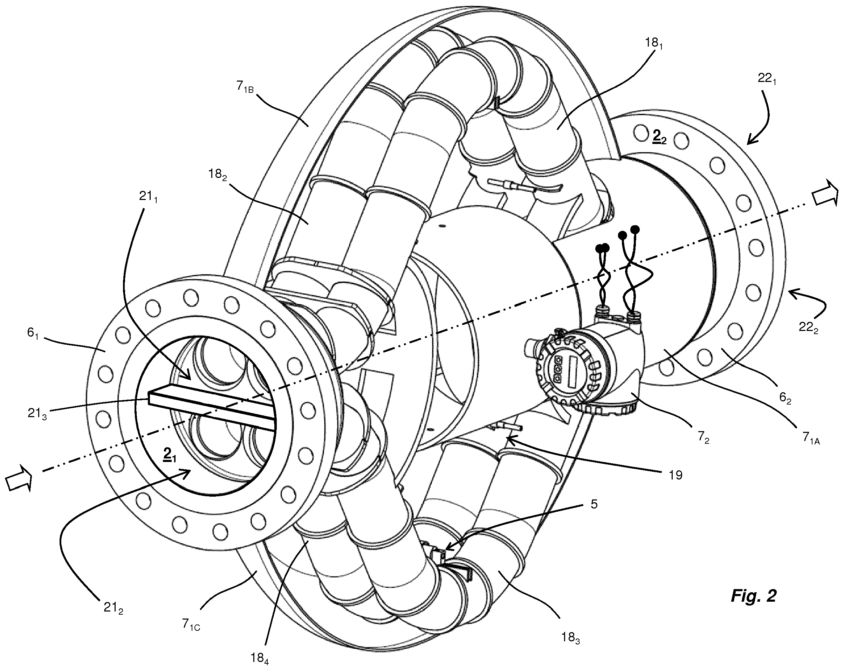

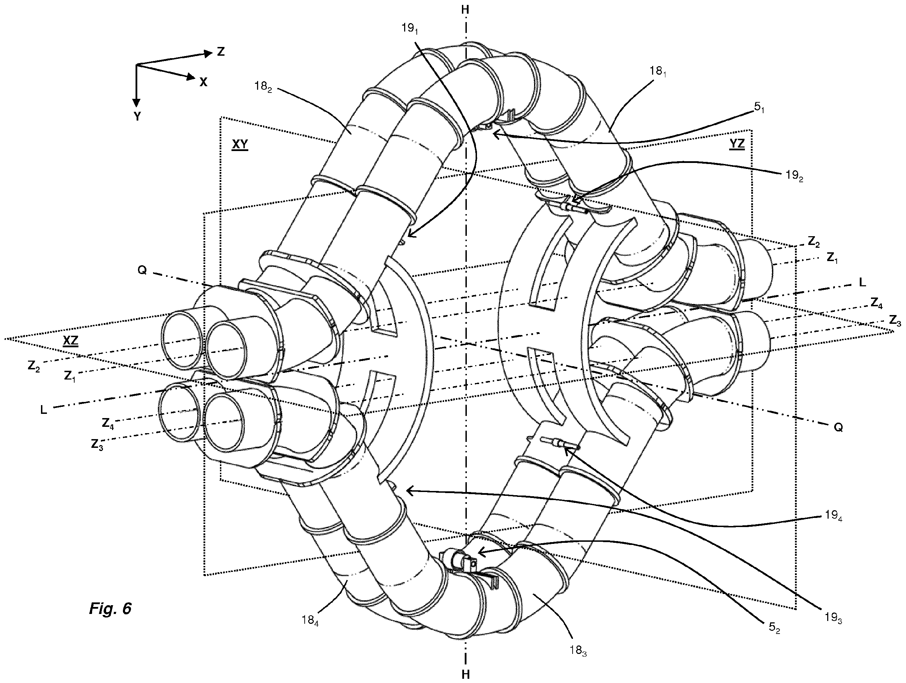

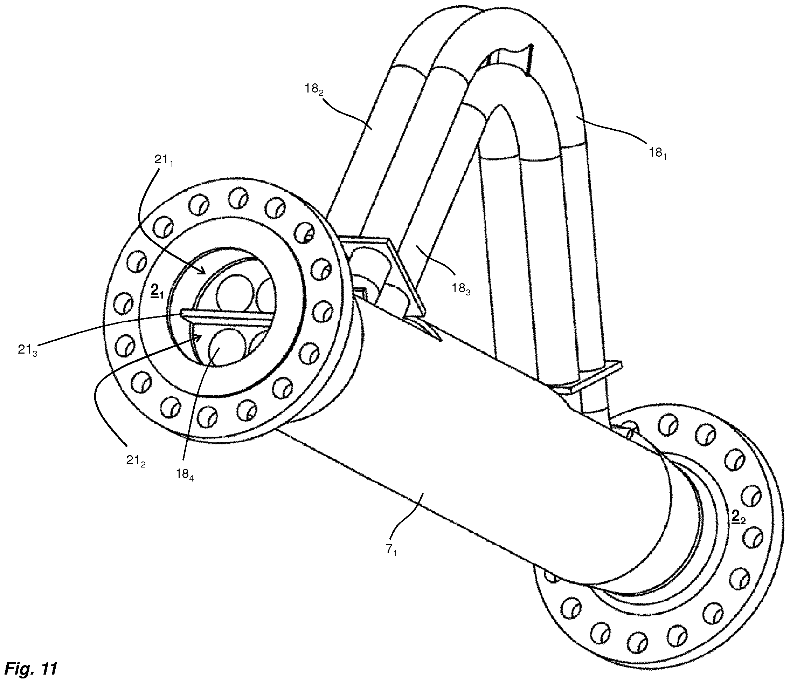

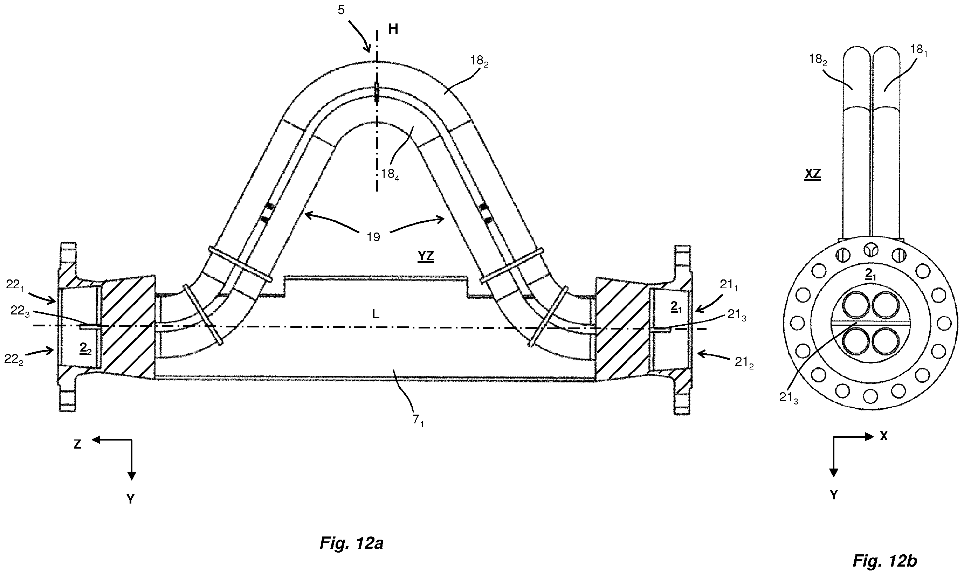

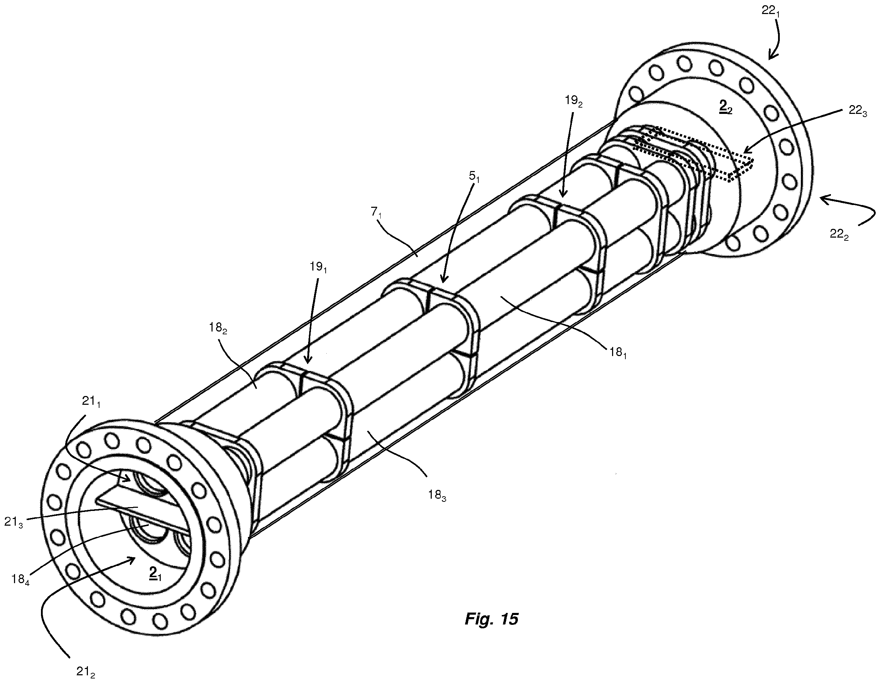

Jedes der Meßsysteme umfaßt jeweils einen Meßaufnehmer 11 vom Vibrationstyp, von dem in den Fig. 2, 3a, 3b, 4, 5 und 6, in den Fig. 11 und 12a und 12b bzw. in der Fig. 15, stellvertretend verschiedene Varianten detaillierter gezeichnet sind. Der Meßaufnehmer 11 ist jeweils dafür eingerichtet, im Betrieb sowohl von zu messendem Fluid durchströmt zu werden als auch von der wenigstens einen Meßgröße abhängige - als Schwingungsmeßsignale ausgebildete - Meßsignale zu liefern, insb. derart, daß nämliche Meßsignale wenigstens einen Signalparameter, beispielsweise eine Signalamplitude, eine Signalfrequenz und/oder einen Phasenwinkel, aufweisen, der einer zeitlichen Änderung der wenigstens einen Meßgröße mit einer entsprechenden Änderung folgt. Der Meßaufnehmer ist im besonderen dafür vorgesehen und eingerichtet, in den Verlauf der erwähnten, im Betrieb vom jeweils zu messenden Fluid durchströmten Rohrleitung eingesetzt zu sein und von nämlichem Fluid durchströmt zu werden. Ferner dient der Meßaufnehmer dazu, im hindurchströmenden Fluid solche mechanische Reaktionskräfte - beispielsweise nämlich von der Massenduchflußrate ṁ abhängige Corioliskräfte, von der Dichte ρ des Fluids abhängige Trägheitskräfte und/oder von der Viskosität η des Fluids abhängige Reibungskräfte - zu erzeugen, die sensorisch erfaßbar, mithin meßbar auf den Meßaufnehmer zurückwirken, derart, daß wenigstens ein Signalparameter wenigstens eines der Meßsignale einen mit einem momentanen (numerischen) Wert der wenigstens einen Meßgröße korrespondierenden (numerischen) Parameterwert aufweist.

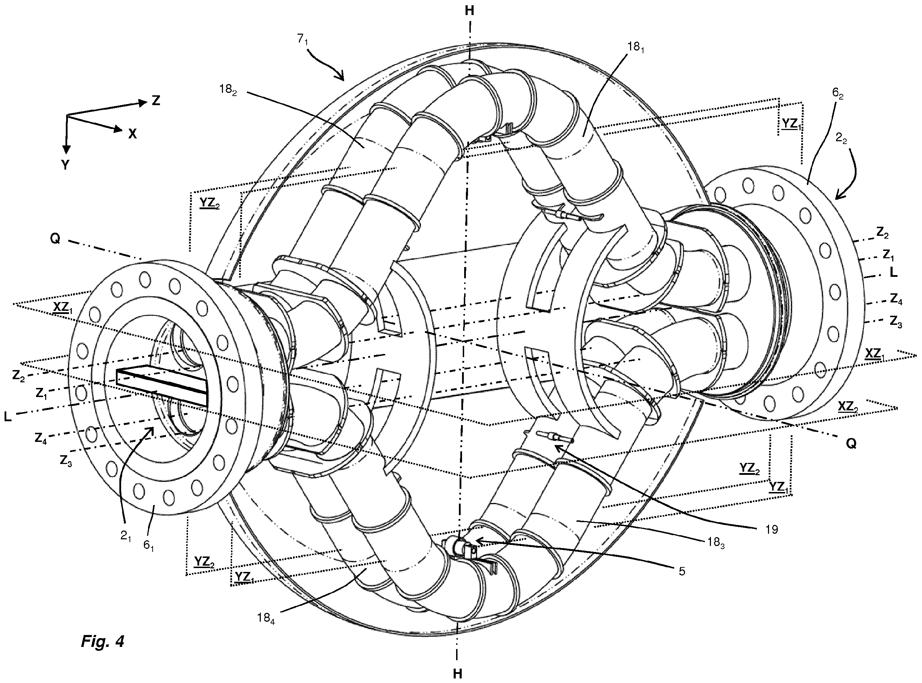

Zum Führen des Fluids umfaßt der Meßaufnehmer 11 - wie u.a. in Fig. 2, 4, und gezeigt 5 bzw. auch aus einer Zusammenschau der Fig. Fig. 1, 2, 3a, 3b, 4 und 5 ohne weiteres ersichtlich - einen ersten Strömungsteiler 2₁, einen zweiten Strömungsteiler 2₂ sowie eine Rohranordnung mit mindestens vier Meßrohren 18₁, 18₂, 18₃, 18₄. Nämliche vier Meßrohre 18₁, 18₂, 18₃, 18₄ sind jeweils unter Bildung strömungstechnisch parallel geschalteter Strömungspfade an die - beispielsweise baugleichen - Strömungsteiler 2₁, 2₂ angeschlossen, und zwar in einer Vibrationen, beispielsweise nämlich Biegeschwingungen, der Meßrohre relativ zueinander ermöglichenden Weise.

Die vier - bei der in den Fig. 2 - 6 gezeigten Variante des Meßaufnehmers lediglich paarweise parallelen - Meßrohre kommunizieren im Betrieb jeweils mit der an den Meßaufnehmer angeschlossenen Rohrleitung und werden im Betrieb zwecks Generierung von Reaktionskräften im hindurchströmenden Fluid zumindest zeitweise, beispielsweise auch simultan, in wenigstens einem für Ermittlung der physikalischen Meßgröße geeigneten, aktiv angeregten Schwingungsmode - dem sogenannten Nutzmode - vibrieren gelassen. Als Material für die Rohrwände der - beispielsweise jeweils monolithischen, mithin jeweils aus einem Stück gefertigten - Meßrohre eignet beispielsweise Titan, Zirkonium oder Tantal bzw. wenigstens eines der vorbezeichneten Metalle enthaltende Legierungen oder auch eine Nickelbasislegierung. Für die meisten Anwendungen der industriellen Meßtechnik, nicht zuletzt auch Anwendungen in der petrochemischen Industrie, können die Meßrohre aber beispielsweis auch aus einem rostfreiem Stahl, beispielsweise auch einem Duplexstahl oder einem Superduplexstahl, den Anforderungen hinsichtlich der mechanischen Festigkeit, der chemischen Beständigkeit sowie den thermischen Anforderungen genügen. Darüber hinaus kann als Material für die vier Meßrohre 18₁, 18₂, 18₃, 18₄ aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze. Nach einer weiteren Ausgestaltung der Erfindung sind die Meßrohre ferner so ausgebildet, daß ein Kaliber des Meßrohrs 18₁ zumindest gleich einem Kaliber des Meßrohrs 18₂ und ein Kaliber des Meßrohrs 18₃ zumindest gleich einem Kaliber des Meßrohrs 18₄ sind, beispielsweise auch derart, daß das Kaliber des Meßrohrs 18₁ auch gleich dem Kaliber des Meßrohrs 18₃ bzw. das Kaliber des Meßrohrs 18₂ auch gleich dem Kaliber des Meßrohrs 18₄ ist, mithin die vier Meßrohre 18₁, 18₂, 18₃, 18₄ von gleichem Kaliber sind. Nach einer weiteren Ausgestaltung der Erfindung sind die Meßrohre 18₁, 18₂, 18₃, 18₄ ferner so geformt und angeordnet, daß die Rohranordnung im Ergebnis zwei - insb. zueinander parallele - gedachte Rohrebenen YZ₁, YZ₂ aufweist, von denen - wie auch in Fig. 4 schematisiert dargestellt - eine erste gedachte Rohrebene YZ₁ imaginär sowohl das Meßrohr 18₁ als auch das Meßrohr 18₃ längs schneidet und eine zweite gedachte Rohrebene YZ₂ imaginär sowohl das Meßrohr 18₂ als auch das Meßrohr 18₄ längs schneidet, insb. derart, daß die erste gedachte Rohrebene sowohl das erste Meßrohr als auch das dritte Meßrohr imaginär halbiert, nämlich jeweils in Längsrichtung imaginär in zwei Hälften spaltet, und/oder daß die zweite gedachte Rohrebene sowohl das dritte Meßrohr als auch das vierte Meßrohr imaginär halbiert, nämlich jeweils in Längsrichtung imaginär zwei Hälften spaltet.

Zum Anregen mechanischer Schwingungen der Meßrohre 18₁, 18₂, 18₃, 18₄, nicht zuletzt auch Schwingungen im vorbezeichneten Nutzmode, weist der Meßaufnehmer ferner eine elektromechanische Erregeranordnung 5 auf. Darüberhinaus umfaßt der Meßaufnehmer auch eine Sensoranordnung 19 zum Erfassen von Schwingungsbewegungen der
Meßrohre 18₁, 18₂, 18₃, 18₄ - beispielsweise nämlich von Schwingungsbewegungen der im Nutzmode schwingenden Meßrohre 18₁, 18₂, 18₃, 18₄ - und zum Generieren sowohl eines Schwingungen wenigstens eines der Meßrohre 18₁, 18₂, 18₃, 18₄ repräsentierenden, insb. eine von einer Dichte eines in der Rohranordnung geführten Fluids abhängige Signalfrequenz aufweisenden, ersten Schwingungsmeßsignals s1 als auch wenigstens eines Schwingungen wenigstens eines der Meßrohre 18₁, 18₂, 18₃, 18₄ repräsentierenden, insb. eine von einer Dichte ρ eines in der Rohranordnung geführten Fluids abhängige Signalfrequenz aufweisenden und/oder um eine von einer Massendurchflußrate ṁ eines durch die Rohranordnung strömenden Fluids abhängige Phasendifferenz gegen das erste Schwingungsmeßsignal phasenverschobenen, zweiten Schwingungsmeßsignals s2.

Nach einer weiteren Ausgestaltung der Erfindung weist der Meßaufnehmer ein, beispielsweise aus einem Stahl gefertigtes, Aufnehmer-Gehäuse 7₁ auf, von dem, wie auch aus den Fig. 1, 2, 3a, 3b, 4 und 5 ersichtlich, ein erstes Gehäuseende mittels des Strömungsteilers 2₁ und ein zweites Gehäuseende mittels des Strömungsteilers 2₂ gebildet sein kann. Das Aufnehmer-Gehäuse 71 weist ferner eine Kavität auf, innerhalb der die mittels der Meßrohre 18₁, 18₂, 18₃, 18₄ gebildete Rohranordnung, die Erregeranordnung sowie die Sensoranordnung, nicht zuletzt auch geschützt vor äußeren Umwelteinflüssen, beispielswese nämlich auch Staub oder Spritzwasser oder auch allfällig auf den Meßaufnehmer von außen einwirkenden Kräften etc., plaziert sind. Überdies kann das Aufnehmer-Gehäuse 7₁ ferner in vorteilhafter Weise auch so ausgeführt und so bemessen sein, daß es bei allfälligen Schäden an einem oder mehreren der darin plazierten Meßrohre, z.B. durch Rißbildung oder Bersten, ausströmendes Fluid bis zu einem geforderten maximalen Überdruck im Inneren des Aufnehmer-Gehäuses 7₁ möglichst lange vollständig zurückzuhalten kann. Als Material für das Aufnehmer-Gehäuse 7₁ können beispielsweise Stähle, wie etwa Baustahl bzw. rostfreier Stahl, verwendet werden. Nach einer weiteren Ausgestaltung der Erfindung ist hierbei ferner vorgesehen, daß sowohl der Strömungsteiler 2₁ als auch der Strömungsteiler 2₂ jeweils integraler Bestandteil des - beispielsweise zumindest teilweise hohlzylindrischen, bei der in den Fig. 1, 2, 3a, 3b, 4 und 5 gezeigten Variante nämlich teilweise im wesentlichen rohrförmigen, mithin auch außen teilweise kreiszylindrischen - Aufnehmer-Gehäuses 7₁ sind, etwa auch in der Weise, daß nämlich das Aufnehmer-Gehäuse 7₁ eine dessen vorbezeichnete Kavität des Aufnehmer-Gehäuses 7₁ seitlich begrenzende Seitenwand aufweist, die sowohl am Strömungsteiler 2₁ als auch am Strömungsteiler 2₂ fixiert bzw. sowohl mit dem Strömungsteiler 2₁ als auch dem Strömungsteiler 2₂ jeweils stoffschlüssig verbunden ist. In den in Fig. 1, 2, 3a, 3b, 4 und 5 gezeigten Ausführungsbeispiel weist das Aufnehmer-Gehäuse 7₁ zudem ein - hier einen Teil der vorbezeichneten Seitenwand bildendendes - Mittelsegment 7_{1A} auf, das mittels eines geraden - hier auch kreiszylindrischen und zunächst dreiteiligen - Rohres gebildet ist. Wie aus der Zusammenschau der Fig. 1, 2, 3a, 3b und 5 ferner ohne weiteres ersichtlich, kann das - hier auch als ein Traggestell für die Rohranordnung dienende, mithin als Trägerrohr
ausgebildete - Mittelsegment 7_{1A} beispielsweise auch mittels eines in etwa ein Kaliber der anzuschließenden Rohrleitung aufweisenden, mithin mit einer nominellen Nennweite des Meßaufnehmers korrespondierenden Rohrs gebildet sein, beispielsweise nämlich einem hinsichtlich Kaliber, Wandstärke und Material der anzuschließenden Rohrleitung entsprechenden und insoweit auch hinsichtlich des erlaubten Betriebsdrucks entsprechend angepaßten Rohr. Zwecks der Realisierung eines möglichst kompakten Meßaufnehmers, nicht zuletzt auch für den Fall, daß dieser eine vergleichsweise große nominelle Nennweite von 250 mm oder mehr aufweisen soll, und/oder daß die Meßrohre seitlich vergleichsweise weitausladend sind, kann das Aufnehmer-Gehäuse 7₁, in vorteilhafter Weise ferner dadurch gebildet sein, daß das Aufnehmer-Gehäuse 7₁ mittels eines entsprechende seitliche Ausnehmungen aufweisenden - hier zwecks vereinfachter Handhabung beispielsweise zunächst dreiteiligen, also aus drei einzelnen Segmente zusammengefügten - Rohres, sowie zwei einander gegenüberliegend seitlich an dem schlußendlich das Mittelsegment des Aufnehmer-Gehäuses bildenden Rohr fixierten, etwa angeschweißten Gehäusekappen 7_{1B}, 7_{1C} gebildet sein, die seitlich aus dem Mittelsegment herausragende Segmente der Meßrohre 18₁, 18₂, 18₃, 18₄ in einer Vibrationen, insb. auch Biegeschwingungen, der Meßrohre relativ zueinander wie auch relativ zum Aufnehmer-Gehäuse 7₁ ermöglichenden Weise umhüllen, gleichwohl möglichst nur geringfügig größer als nämliche Segmente gewählt sind. Von den beiden, beispielsweise auch baugleichen, Gehäusekappen 7_{1B}, 7_{1C} können - wie auch aus der Zusammenschau der Fig. 1, 2, 3a, 3b und 4 ersichtlich - beispielsweise eine erste Gehäusekappe 7_{1B} über ein auf einer ersten Seite aus dem - hier auch als Traggestell für die Rohranordnung dienenden, mithin als Trägerrohr ausgebildeten - Mittelsegment 7_{1A} herausragendes Segment des Meßrohrs 18₁ und ein auf der ersten Seite aus dem Mittelsegment 7_{1A} herausragendes Segment des Meßrohrs 18₂ und eine, etwa zur Gehäusekappe 7_{1B} baugleiche, zweite Gehäusekappe 7_{1C} über ein auf einer der ersten Seite gegenüberliegenden zweiten Seite aus dem Mittelsegment 7_{1A} herausragendes Segment des Meßrohrs 18₃ und ein auf der zweiten Seite aus dem Mittelsegment herausragendes Segment des Meßrohrs 18₄ gestülpt sein.

Gemäß einer weiteren Ausgestaltung der Erfindung sind der Strömungsteiler 20₁ mit einem Flansch 6₁ zum Anschließen des Meßaufnehmers an ein, beispielsweise dem Zuführen von Fluid zum Meßaufnehmer dienendes, erstes Rohrsegment der vorbezeichneten Rohrleitung und der Strömungsteiler 20₂ mit einem Flansch 6₂ zum Anschließen des Meßaufnehmers an ein, beispielsweise dem Abführen von Fluid vom Meßaufnehmer dienendes, zweites Rohrsegment nämlicher Rohrleitung versehen. Zum Verbinden des Meßaufnehmers mit einem jeweiligen korrespondierenden Rohrsegment der Rohrleitung weist jeder der Flansche ferner jeweils eine entsprechende Dichtfläche auf, wobei ein Abstand zwischen nämlichen Dichtflächen eine Einbaulänge des Meßaufnehmers definiert. Die Flansche können hinsichtlich ihres Innendurchmessers, ihrer jeweiligen Dichtfläche sowie den der Aufnahme entsprechender Verbindungsbolzen dienenden Flanschbohrungen entsprechend der für den Meßaufnehmer vorgesehenen nominelle Nennweite sowie den dafür ggf. einschlägigen Industrienormen, die einem Kaliber bzw. einem nominellen Betriebsdruck der Rohrleitung, in deren Verlauf der Meßaufnehmer einzusetzen ist, entspricht, ausgebildet sein. Nicht zuletzt für den erwähnten Fall, daß das Aufnehmer-Gehäuse mittels eines als Trägerrohr dienlichen rohrförmigen Segments, beispielsweise nämlich dem vorbezeichneten Mittelsegment 7_{1A}, gebildet ist und nämliches Segment wie auch die mit dem jeweiligen Flansch verbundenen Strömungsteiler im Vor- bzw. Auslaufbereich jeweils den gleichen Innendurchmesser aufweisen, kann das Aufnehmer-Gehäuses zudem auch in der Weise gebildet werden, daß an die Enden des das Mittelsegment bildenden Rohrs die Flansche angeformt oder angeschweißt sind, und daß die Strömungsteiler mittels, insb. von den Flanschen etwas beabstandet, an die Innenwand orbital und/oder mittels Laser angeschweißten, die Strömungsöffnungen aufweisenden Platten gebildet sind.

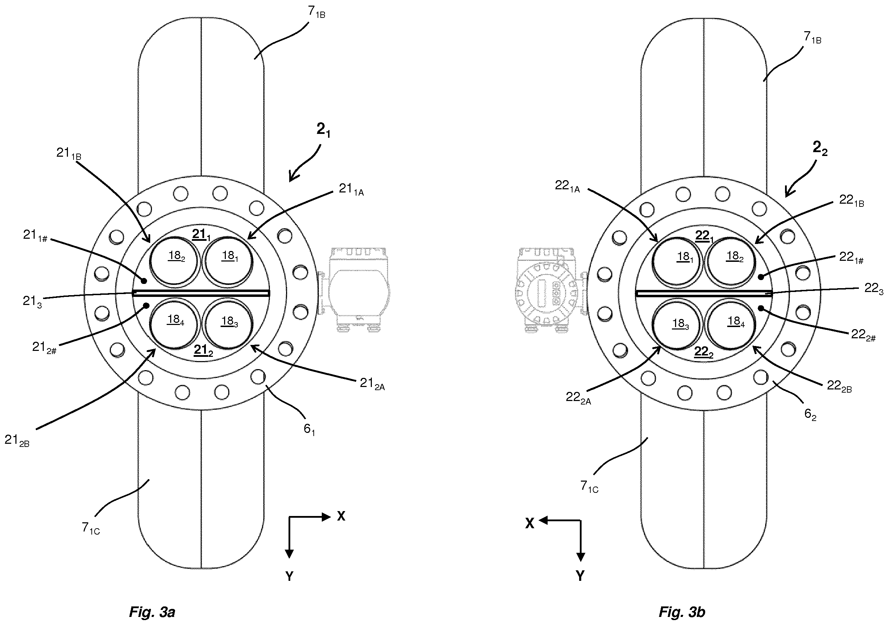

Beim erfindungsgemäßen Meßaufnehmer bzw. dem damit gebildeten Meßsystem sind - nicht zuletzt auch zwecks einer Konditionierung des im Betrieb in den Meßaufnehmer einströmenden bzw. aus dem Meßaufnehmer wieder ausströmenden Fluids bzw. dessen Strömungsprofils und/oder zwecks einer Reduzierung eines durch den Meßaufnehmer selbst provozierten Druckverlusts - im Strömungsteiler 2₁ zwei - beispielsweise durch eine einzige Zwischenwand 21₃ - voneinander separierte, jeweils röhrenförmige, nämlich jeweils zum Führen von ein- und wieder ausströmendem Fluid eingerichtete Kammern 21₁, 21₂ vorgesehen, und sind auch im - beispielsweise zum Strömungsteiler 2₁ baugleichen - Strömungsteiler 2₂ zwei- beispielsweise durch eine einzige Zwischenwand 22₃ - voneinander separierten, jeweils ebenfalls röhrenförmige Kammern 22₁, 22₂ vorgesehen. Von nämlichen zwei Kammern 21₁, 21₂ des Strömungsteilers 2₁ weisen, wie auch aus einer Zusammenschau der Fig. 1, 2, 3a, 3b und 5 ohne weiteres ersichtlich, eine erste Kammer 21₁ einen Kammerboden 21_{1#}, in den zwei voneinander beabstandet in ein Lumen nämlicher Kammer 21₁ mündende, beispielsweise auch baugleiche, Strömungsöffnungen 21_{1A}, 21_{1B} eingeformt sind, und eine zweite Kammer 21₂ einen Kammerboden 21_{2#} in den ebenfalls zwei voneinander beabstandet in ein Lumen nämlicher Kammer 21₂ mündende, beispielsweise baugleiche, Strömungsöffnungen 21_{2A}, 21_{2B} eingeformt sind, auf, während von den zwei Kammern 22₁, 22₂ des Strömungsteilers 2₂ eine erste Kammer 22₁ einen Kammerboden 22_{1#}, in den zwei voneinander beabstandet in ein Lumen nämlicher Kammer 22₁ mündende, beispielsweise baugleiche, Strömungsöffnungen 22_{1A}, 22_{1B} eingeformt sind, und eine zweite Kammer 22₂ einen Kammerboden 22_{2#} in den zwei voneinander beabstandet in ein Lumen nämlicher Kammer 22₂ mündende, beispielsweise baugleiche, Strömungsöffnungen 22_{2A}, 22_{2B} eingeformt sind, aufweisen. Wie aus einer Zusammenschau der Fig. 2, 3a, 3b und 5 ferner ersichtlich, münden beim erfindungsgemäßen Meßaufnehmer von den vier Meßrohren 18₁, 18₂, 18₃, 18₄ der Rohranordnung ein erstes Meßrohr 18₁ mit einem einlaßseitigen ersten Meßrohrende in eine erste Strömungsöffnung 20_{1A} der Kammer 21₁ und mit einem auslaßseitigen zweiten Meßrohrende in eine erste Strömungsöffnung 20_{2A} der Kammer 22₁, ein - beispielsweise zum Meßrohr 18₁ zumindest abschnittsweise paralleles - zweites Meßrohr 18₂ mit einem einlaßseitigen ersten Meßrohrende in eine zweite Strömungsöffnung 20_{1B} der Kammer 21₁ und mit einem auslaßseitigen zweiten Meßrohrende in eine zweite Strömungsöffnung 20_{2B} der Kammer 22₁, ein drittes Meßrohr 18₃ mit einem einlaßseitigen ersten Meßrohrende in eine erste Strömungsöffnung 20_{1C} der Kammer 21₂ und mit einem auslaßseitigen zweiten Meßrohrende in eine erste Strömungsöffnung 20_{2C} der Kammer 22₂ sowie ein - beispielsweise zum Meßrohr 18₃ zumindest abschnittsweise paralleles - viertes Meßrohr 18₄ mit einem einlaßseitigen ersten Meßrohrende in eine zweite Strömungsöffnung 20_{1D} der Kammer 21₂ und mit einem auslaßseitigen zweiten Meßrohrende in eine zweite Strömungsöffnung 20_{2D} der Kammer 22₂. Jede der vorbezeichneten Kammern kann jeweils z.B. zumindest abschnittsweise hohlzylindrisch, nämlich inform eines von einer durch einander parallele Geraden gebildete jeweiligen Mantel- bzw. Zylinderfläche begrenzter Holhlraum ausgebildet sein, beispielsweise auch derart, daß ggf. das Lumen der jeweiligen Kammer 21₁, 21₂, 22₁ bzw. 22₂ jeweils ein Vielzahl von hintereinanderliegenden, gleichwohl zueinander parallelen und/oder ähnlichen gedachten Querschnittsflächen mit - wie in Fig. 3a, 3b angedeutet bzw. aus einer Zusammenschau der Fig. 2 und 3a bzw. 2 und 3b ersichtlich - beispielsweise jeweils kreissegmentförmiger bzw. D-förmiger Silhouette oder Kontur aufweist.

Die in den Kammerboden 21_{1#} eingeformten Strömungsöffnungen 21_{1A}, 21_{1B} und die in den Kammerboden 21_{2#} eingeformten Strömungsöffnungen 21_{2A}, 21_{2B} sind nach einer weiteren Ausgestaltung der Erfindung ferner so angeordnet, daß - wie auch in Fig. 3a angedeutet - ein minimaler Abstand zwischen den beiden Strömungsöffnungen 21_{1A}, 21_{1B} gleich einem minimalen Abstand zwischen den Strömungsöffnungen 21_{2A}, 21_{2B} ist, bzw. daß ein minimaler Abstand zwischen der in den Kammerboden 21_{1#} eingeformten Strömungsöffnung 21_{1A} und der in den Kammerboden 21_{2#} eingeformten Strömungsöffnung 21_{2A} gleich einem minimalen Abstand zwischen der in den Kammerboden 21_{1#} eingeformten Strömungsöffnung 21_{1B} und der in den Kammerboden 21_{2#} eingeformten Strömungsöffnung 21_{2B} ist. Alternativ oder in Ergänzung können die in den Kammerboden 22_{1#} eingeformten Strömungsöffnungen 22_{1A}, 22_{1B} und die in den Kammerboden 22_{2#} eingeformten Strömungsöffnungen 22_{2A}, 22_{2B} - wie u.a. auch in Fig. 3b angedeutet - entsprechend so angeordnet sein, daß ein minimaler Abstand zwischen den in den Kammerboden 22_{1#} eingeformten Strömungsöffnungen 22_{1A}, 22_{1B} gleich einem minimalen Abstand zwischen den in den Kammerboden 22_{2#} eingeformten Strömungsöffnungen 22_{2A}, 22_{2B} ist und/oder daß ein minimaler Abstand zwischen der in den Kammerboden 22_{1#} eingeformten Strömungsöffnung 22_{1A} und der in den Kammerboden 22_{2#} eingeformten Strömungsöffnung 22_{2A} gleich einem minimalen Abstand zwischen der in den Kammerboden 22_{1#} eingeformten Strömungsöffnung 22_{1B} und der in den Kammerboden 22_{2#} eingeformten Strömungsöffnung 22_{2B} ist. Nach einer weiteren Ausgestaltung der Erfindung ist ferner vorgesehen, die Strömungsteiler 2₁, 2₂ so auszubilden, daß die Kammer 21₁ des Strömungsteilers 2₁ baugleich mit wenigstens einer der Kammern 22₁, 22₂ des Strömungsteilers 2₂ ist, beispielsweise auch derart, daß nämliche Kammer 21₁ baugleich mit lediglich einer Kammer des Strömungsteilers 2₂ ist. Alternativ dazu oder in Ergänzung ist ferner vorgesehen, die Kammer 21₂ des Strömungsteilers 2₁ baugleich mit wenigstens einer Kammer des Strömungsteilers 2₂ auszubilden, beispielsweise auch derart, daß nämliche Kammer 21₂ baugleich mit lediglich einer Kammer des Strömungsteilers 2₂ ist.

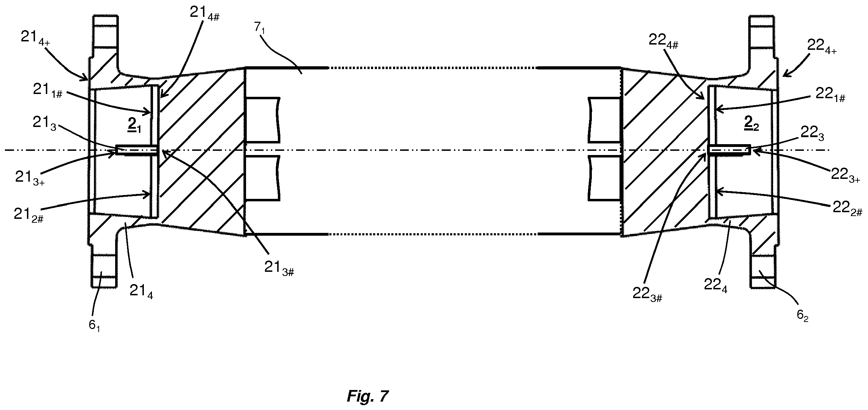

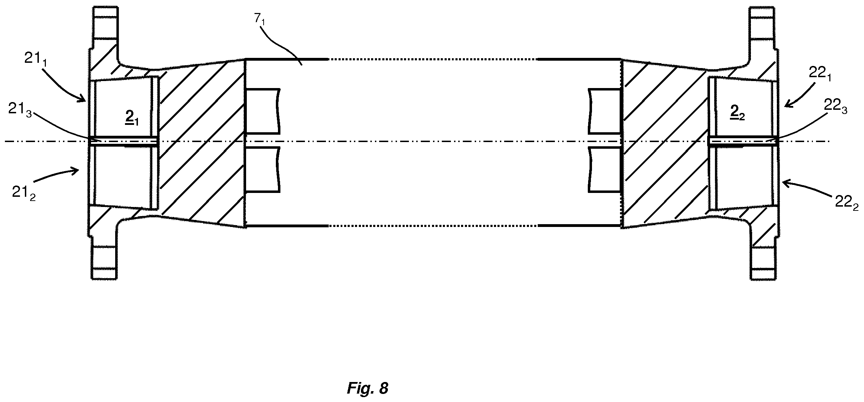

Zum Bilden der beiden Kammern 21₁, 21₂ weist der Strömungsteiler 2₁ gemäß einer weiteren Ausgestaltung der Erfindung, wie insb. auch in Fig. 7 schematisch dargestellt bzw. auch aus einer Zusammenschau der Fig. 2, 3a, 3b, 4, 5 und 7 ohne weiteres ersichtlich - einen sich von einem - hier im wesentlichen kreisringförmigen - proximalen, nämlich sowohl an eine äußere - hier im wesentlichen kreisbogenartige - Randzone des Kammerbodens 21_{1#} der zugehörigen Kammer 21₁, als auch an eine äußere - hier ebenfalls im wesentlichen kreisbogenartige - Randzone des Kammerbodens 21_{2#} der zugehörigen Kammer 21₂ grenzenden Stutzende 21_{4#} bis zu einem - hier im wesentlichen kreisringförmigen - distalen, nämlich sowohl vom Kammerboden 21_{1#} als auch vom Kammerboden 21_{2#} entfernten Stutzende 21₄₊ erstreckenden - beispielsweise im wesentlichen röhrenförmigen bzw. hohlzylindrischen - Anschlußstutzen 21₄ sowie eine innerhalb eines Lumens nämlichen Anschlußstutzens 21₄ angeordnete, sich von einem proximalen, nämlich sowohl an eine innere Randzone des Kammerbodens 21_{1#} der zugehörigen Kammer 21₁ als auch an eine innere Randzone des Kammerbodens 21_{2#} der zugehörigen Kammer 21_{2#} grenzenden Wandende 21_{3#} bis zu einem distalen, nämlich sowohl vom Kammerboden 21_{1#} als auch vom Kammerboden 21_{2#} entfernten Wandende 21₃₊ erstreckenden - beispielsweise plattenförmige - Zwischenwand 21₃ mit einem den Anschlußstutzen kontaktierenden ersten Seitenrand und einem den Anschlußstutzen kontaktierenden zweiten Seitenrand auf. Zwischenwand 21₃ und Anschlußstutzen 21₄ sind ferner so ausgebildet und angeordnet, daß die Kammer21₁ seitlich von der Zwischenwand 21₃ sowie einem sich zwischen dem vorbezeichneten ersten Seitenrand der Zwischenwand 21₃ und dem vorbezeichneten zweiten Seitenrand der Zwischenwand 21₃ erstreckenden ersten Segment des Anschlußstutzens 21₄ begrenzt ist und daß die Kammer 21₂ seitlich von der Zwischenwand 21₃ sowie einem sich zwischen dem vorbezeichneten ersten Seitenrand der Zwischenwand 21₃ und dem zweiten Seitenrand der Zwischenwand 21₃ erstreckenden zweiten Segment des Anschlußstutzens 21₄ begrenzt ist. Ferner weist der Strömungsteiler 2₂ nach einer weiteren Ausgestaltung der Erfindung einen sich von einem - beispielsweise kreisringförmigen - proximalen, nämlich sowohl an eine äußere - beispielsweise kreisbogenartige - Randzone des Kammerbodens 22_{1#} der zugehörigen Kammer 22₁ als auch an eine äußere - beispielsweise kreisbogenartige - Randzone des Kammerbodens 22_{2#} der zugehörigen Kammer 22₂ grenzenden Stutzende 22_{4#} bis zu einem - beispielsweise kreisringförmigen - distalen, nämlich sowohl vom Kammerboden 22_{1#} als auch vom Kammerboden 22_{2#} entfernten Stutzende 22₄₊ erstreckenden - beispielsweise röhrenförmigen und/oder hohlzylindrischen - Anschlußstutzen 22₄ sowie eine innerhalb eines Lumens nämlichen Anschlußstutzens 22₄ angeordnete, sich von einem proximalen, nämlich sowohl an eine innere Randzone des Kammerbodens 22_{1#} als auch an eine innere Randzone des des Kammerbodens 22_{2#} grenzenden Wandende 22_{3#} bis zu einem distalen, nämlich sowohl vom Kammerboden 22_{1#} als auch vom Kammerboden 22_{2#} entfernten Wandende 22₃₊ erstreckenden - beispielsweise plattenförmige - Zwischenwand 22₃ mit einem den Anschlußstutzen 22₄ kontaktierenden ersten Seitenrand und einem den Anschlußstutzen 22₄ kontaktierenden zweiten Seitenrand auf. Zwischenwand 22₃ und Anschlußstutzen 22₄ sind ferner so ausgebildet und angeordnet, daß die Kammer 22₁ seitlich von der Zwischenwand 22₃ sowie einem sich zwischen dem ersten Seitenrand der Zwischenwand 22₃ und dem zweiten Seitenrand nämlicher Zwischenwand 22₃ erstreckenden ersten Segment des Anschlußstutzens 22₄ begrenzt ist und daß die Kammer 22₂ seitlich von der Zwischenwand 22₃ sowie einem sich zwischen dem ersten Seitenrand der Zwischenwand 22₃ und dem zweiten Seitenrand nämlicher Zwischenwand 22₃ erstreckenden zweiten Segment des Anschlußstutzens 22₄ begrenzt ist. Die Zwischenwand 21₃ bzw. die Zwischenwand 22₃ können hinsichtlich einer jeweiligen Wandlänge, gemessen als ein jeweils kürzester Abstand zwischen dem jeweiligen proximale Wandende und dem jeweiligen distalen Wandende, beispielsweise jeweils so bemessen sein, daß - wie u.a. auch aus der Fig. 7 ohne weiteres ersichtlich - nämliche jeweilige Wandlänge jeweils kleiner ist als eine jeweilige Stutzenlänge des jeweils zugehörigen Anschlußstutzens 21₄ bzw. 22₄, gemessen als ein jeweils kürzester Abstand zwischen dem jeweiligen proximale Stutzenende 21_{4#} bzw. 22_{4#} und dem jeweiligen distalen Stutzenende 21₄₊ bzw. 22₄₊, z.B. derart, daß die Wandlänge jeder der Zwischenwände jeweils mehr als ein 0,3-faches der Stutzenlänge des jeweils zugehörigen Anschlußstutzen, gleichwohl weniger als ein 0,9-faches nämlicher Stutzenlänge beträgt. Die Zwischenwände 21₃ bzw. 22₃ und die Anschlußstutzen 21₄ bzw. 22₄ können aber beispielsweise auch so bemessen sein, daß - wie auch in Fig. 8 angedeutetet - die Wandlänge der Zwischenwand 21₃ gleich der Stutzenlänge des zugehörigen Anschlußstutzens 21₄ und/oder daß die Wandlänge der Zwischenwand 22₃ gleich der Stutzenlänge des zugehörigen Anschlußstutzens 22₄ sind.

Jede der vorbezeichneten Zwischenwände 21₃, 22₃ kann ferner so ausgebildet sein, daß den jeweiligen Kammern zugewandte Oberflächen im wesentlichen planparallel ausgebildet sind. Darüberhinaus können die Zwischenwände 21₃, 22₃ zudem so ausgebildet und angeordnet sein, daß im Ergebnis jede der damit jeweils gebildeten Kammern 21₁, 21₂ bzw. 22₁, 22₂ gleich groß ist, wie eine jeweilige benachbarte, nämlich jeweils an dieselbe Zwischenwand angrenzende Kammer, und/oder daß die beiden Kammern eines Strömungsteilers formgleich sind. Es kann aber durchaus auch von Vorteil sein, die vorbezeichneten Zwischenwände zumindest abschnittsweise gewölbt auszubilden und/oder so zu plazieren, daß im Ergebnis unterschiedlich große und/oder unterschiedlich geformte Kammern 21₁, 21₂, 22₁, 22₂ gebildet sind, beispielsweise nämlich um eine verbesserte Aufteilung des strömenden Fluids auf die vier Meßrohre bzw. eine an die Rohranordnung und/oder eine geplante Einbausituation besser angepaßte Aufteilung von (Teil-) Strömungswiderständen des Meßaufnehmers 11 zu erreichen. Beispielsweise kann die Zwischenwand des ersten Strömungsteilers zumindest abschnittsweise gewölbt sein, etwa derart, daß eine der jeweiligen ersten Kammer des ersten Strömungsteilers zugewandte Fläche konvex und eine der zweiten Kammer des ersten Strömungsteilers zugewandte Fläche konkav sind bzw. kann die Zwischenwand des zweiten Strömungsteilers zumindest abschnittsweise gewölbt sein, derart, daß eine der ersten Kammer des zweiten Strömungsteilers zugewandte Fläche konvex und eine der zweiten Kammer des zweiten Strömungsteilers zugewandte Fläche konkav sind.

Nach einer weiteren Ausgestaltung der Erfindung sind die Meßrohre ferner so geformt und angeordnet, daß die die Rohranordnung damit gebildete wenigstens zwei zueinander senkrechte gedachte Symmetrieebenen XY, YZ aufweist, bezüglich welcher Symmetrieebenen die Rohranordnung jeweils spiegelsymmetrisch ist. Eine erste Symmetrieebene XY der Rohranordnung ist von einer sowohl zwischen dem Meßrohr 18₁ und Meßrohr 18₂ als auch zwischen dem Meßrohr 18₃ und Meßrohr 18₄ verlaufenden gedachten Längsschnittebene YZ der Rohranordnung gebildet, während eine zweite Symmetrieebene XY der Rohranordnung einer zur ersten Symmetrieebene YZ senkrechten, gleichwohl jedes der vier Meßrohre entlang von dessen jeweiligem mittigen Querschnitt schneidenden gedachten Querschnittsebene des Meßaufnehmers entspricht. Bei der in den Fig. 2 - 6 gezeigten Variante des Meßaufnehmers bzw. des damit gebildeten Meßsystems stellt nämlicher mittigen Querschnitt zudem jeweils einen Scheitelpunkt des jeweiligen Meßrohrs. Wie in den Fig. 2, 5 und 6 gezeigt bzw. einer Zusammenschau nämlicher Figuren ohne weiteres erkennbar, können die Meßrohre 18₁, 18₂, 18₃, 18₄ ferner beispielsweise einander baugleich ausgebildet und zudem auch so angeordnet sein, daß die damit gebildete Rohranordnung weiters noch ein dritte Symmetrieebenen XZ aufweist, bezüglich der die Rohranordnung jeweils ebenfalls spiegelsymmetrisch ist. Nämliche Symmetrieebenen XZ entspricht hierbei einer sowohl zwischen dem Meßrohr 18₁ und dem Meßrohr 18₃ als auch zwischen dem Meßrohr 18₂ und dem Meßrohr 18₄ liegenden, sowohl zur vorbezeichneten Querschnittsebene als auch zur vorbezeichneten ersten Längsschnittebene jeweils senkrechten zweiten gedachte Längsschnittebene XZ. Durch eine solche Anordnung der Meßrohre können durch deren Biegeschwingungen induzierte, im wesentlichen senkrecht zur Schnittlinie der beiden vorgenannten gedachten Längsschnittebenen wirkende Querkräfte auch bei Verwendung von vier gebogenen Meßrohren weitgehend neutralisiert werden.

Zudem können die beiden Strömungsteiler 20₁, 20₂ ferner so ausgebildet und so im Meßaufnehmer angeordnet sein, daß, wie auch in den Fig. 4, 5 und 6 schematisch dargestellt, eine die Strömungsöffnung 21_{1A} des Strömungsteilers 2₁ mit der Strömungsöffnung 22_{1A} des Strömungsteilers 2₂ imaginär verbindende gedachte erste Verbindungsachse Z₁ des Meßaufnehmers parallel zu einer die Strömungsöffnung 21_{1B} des Strömungsteilers 2₁ mit der Strömungsöffnung 22_{1B} des Strömungsteilers 2₂ imaginär verbindende gedachten zweiten Verbindungsachse Z₂ des Meßaufnehmers verläuft, und daß eine die Strömungsöffnung 21_{2A} des Strömungsteilers 2₁ mit der Strömungsöffnung 22_{2A} des Strömungsteilers 2₂ imaginär verbindende gedachte dritten Verbindungsachse Z₃ des Meßaufnehmers parallel zu einer die Strömungsöffnung 21_{2B} des Strömungsteilers 2₁ mit der Strömungsöffnung 22_{2B} des Strömungsteilers 2₂ imaginär verbindende gedachten vierten Verbindungsachse Z₄ des Meßaufnehmers verläuft. Wie in der Fig. 4, 5 und 6 ferner gezeigt bzw. auch aus einer Zusammenschau nämlicher Figuren ersichtlich, können die Strömungsteiler 2₁, 2₂ ferner so ausgebildet und im Meßaufnehmer so angeordnet sein, daß die vorbezeichneten Verbindungsachsen Z₁, Z₂, Z₃, Z₄ auch zu einer mit der Rohrleitung im wesentlichen fluchtenden und/oder mit vorgenannter Schnittlinie der beiden gedachten Längsschnittebenen der Rohranordnung koinzidente Hauptströmungsachse L des Meßaufnehmers parallel sind. Desweiteren können die beiden Strömungsteiler 2₁, 2₂ zudem auch so ausgebildet und so im Meßaufnehmer angeordnet sein, daß eine erste gedachte Längsschnittebene YZ₁ des Meßaufnehmers, innerhalb der die erste gedachte Verbindungsachse Z₁ und die dritte gedachte Verbindungsachse Z₃ verlaufen, parallel zu einer zweiten gedachten Längsschnittebene YZ₂ des Meßaufnehmers ist, innerhalb der die gedachte zweite Verbindungsachse Z₂ und die gedachte vierte Verbindungsachse Z₄ verlaufen. Darüberhinaus können die Meßrohre ferner so ausgebildet und so im Meßaufnehmer angeordnet sein, daß die vorbezeichnete gedachte erste Längsschnittebene (YZ) der Rohranordnung, wie u.a. auch aus der Zusammenschau der Fig. 4, 5 und 6 erkennbar, zwischen der vorgenannten ersten gedachten Längsschnittebene YZ₁ des Meßaufnehmers und der vorgenannten zweiten gedachten Längsschnittebene YZ₂ des Meßaufnehmers liegt, beispielsweise auch so, daß die erste Längsschnittebene der Rohranordnung parallel zur ersten und zweiten Längsschnittebene YZ₁, YZ₂ des Meßaufnehmers ist. Zudem können die Meßrohre so ausgebildet bzw. angeordnet sein, daß die zweite gedachte Längsschnittebene (XZ) der Rohranordnung zwischen einer dritten gedachten Längsschnittebene XZ₁ des Meßaufnehmers, innerhalb der die erste gedachte Verbindungsachse Z₁ und die zweite gedachte Verbindungsachse Z₂ verlaufen, und einer vierten gedachten Längsschnittebene XZ₂ des Meßaufnehmers, innerhalb der die dritte gedachte Verbindungsachse Z₃ und die vierte gedachte Verbindungsachse Z₄ verlaufen, verläuft, etwa derart, daß die zweite gedachte Längsschnittebene (XZ) der Rohranordnung parallel zur dritten gedachten Längsschnittebene XZ₁ des Meßaufnehmers und parallel zur vierten gedachten Längsschnittebene XZ₂ des Meßaufnehmers ist. Ferner kann die die Rohranordnung so ausgebildet und so im Aufnehmer-Gehäuse plaziert sein, daß im Ergebnis nicht nur die gemeinsame Schnittlinie der ersten und zweiten gedachten Längsschnittebenen der Rohranordnung parallel bzw. koinzident zur Längsachse L ist, sondern auch eine gemeinsame Schnittlinie der ersten Längsschnittebene (YZ) und der Querschnittsebene (XY) parallel zu einer zur Längsachse L senkrechten gedachten Querachse Q des Meßaufnehmers und eine gemeinsame Schnittlinie der zweiten Längsschnittebene (XZ) und der Querschnittsebene (XY) parallel zu einer sowohl zur gedachten Längsachse L als auch zur gedachten Querachse Q senkrechten gedachten Hochachse H des Meßaufnehmers sind. Die Strömungsöffnungen 21_{1A}, 21_{1B}, 21_{2A}, 21_{2B} können ferner so angeordnet sein, daß jene gedachten Flächenschwerpunkte, die zu den - hier kreisförmigen - Querschnittsflächen nämlicher Strömungsöffnungen gehören, die Eckpunkte eines gedachten Rechteck oder eines gedachten Quadrats, bilden, beispielsweise auch derart, daß nämliche Querschnittsflächen wiederum in einer gemeinsamen gedachten, senkrecht zu einer - beispielsweise innerhalb der ersten Längsschnittebene (YZ) der Rohranordnung verlaufenden bzw. zur erwähnten Hauptströmungsachse des Meßaufnehmers parallelen oder auch koinzidenten - Längsachse L des Meßaufnehmers verlaufenden bzw. auch zu den vorbezeichneten Längsschnittebenen des Meßaufnehmers senkrechten Querschnittebene des Strömungsteilers 2₁ liegen. Gleichermaßen können auch die Strömungsöffnungen 22_{1A}, 22_{1B}, 22_{2A}, 22_{2B} so angeordnet, daß zu - hier ebenfalls kreisförmigen - Querschnittsflächen nämlicher Strömungsöffnungen zugehörige gedachte Flächenschwerpunkte ebenfalls Eckpunkte eines gedachten Rechtecks bzw. Quadrats bilden, beispielsweise auch derart, daß nämliche Querschnittsflächen wiederum in einer gemeinsamen gedachten, senkrecht zur erwähnten Hauptströmungs- oder auch Längsachse L des Meßaufnehmers verlaufenden bzw. zu den Längsschnittebenen des Meßaufnehmers senkrechten Querschnittebene des Strömungsteilers 2₂ liegen.

Die Meßrohre 18₁, 18₂, 18₃, 18₄, sind gemäß einer weiteren Ausgestaltung zumindest paarweise baugleich und/oder zueinander zumindest paarweise bzw. zumindest abschnittsweise parallel angeordnet, beispielsweise auch derart, daß Meßrohre 18₁, 18₂, 18₃, 18₄ - wie auch in Fig. 2, 4 und 5 beispielhaft gezeigt - lediglich paarweise zueinander parallel verlaufend angeordnet sind oder - wie auch aus den Fig. 12a und 12b ohne weiteres ersichtlich - allenfalls bzw. lediglich paarweise baugleich sind. Zudem können die Meßrohre 18₁, 18₂, 18₃, 18₄ des erfindungsgemäßen Meßsystems - wie auch in Fig. 2, 4, 5, 6, 11, 12a, 12b, dargestellt oder wie auch aus einer Zusammenschau der Fig. 2, 4, 5, und 6 bzw. der Fig. 11, 12a, 12b ohne weiteres ersichtlich - als gebogene, beispielsweise nämlich zumindest abschnittsweise kreisbogenförmige und/oder zumindest abschnittsweise V- bzw. U-förmige, Meßrohre ausgebildet sein, derart, daß jedes der Meßrohre 18₁, 18₂, 18₃, 18₄ jeweils wenigstens ein - insb. jeweils kreisbogenförmig und/oder mittleres, nämlich jeweils eine Mitte des jeweiligen Meßrohrs bildendendes - gebogenes Rohrsegment aufweist. In Ergänzung kann jedes der vier Meßrohre ferner so ausgebildet sein, daß es - wie auch in den Fig. 2, 4, 5, 6, 11, 12a beispielhaft gezeigt - abschnittsweise gerade ist. Nach einer weiteren Ausgestaltung der Erfindung ist ferner insbesondere vorgesehen, daß jedes der, insb. jeweils V-förmigen, Meßrohre jeweils drei - insb. jeweils kreisbogenförmig - gebogene Rohrsegmente aufweist, insb. derart, daß zwei jeweils benachbarte gebogene Rohrsegmente des jeweiligen Meßrohrs jeweils über ein dazwischen befindliches gerades Rohrsegment nämlichen Meßrohrs miteinander verbunden sind. Nach einer weiteren Ausgestaltung der Erfindung sind die Meßrohre nicht nur in der vorbezeichneten Weise gebogen ausgebildet, beispielsweise nämlich U- oder V-förmig, sondern zudem auch so geformt und angeordnet, daß - wie auch aus den Fig. 11, 12a und 12b bzw. deren Zusammenschau ersichtlich - das wenigstens eine gebogene Rohrsegment jedes der, hier jeweils V-förmigen, Meßrohre jeweils parallel zu einem bzw. dem wenigsten einen gebogenen Rohrsegment jedes der jeweils anderen Meßrohre ist, bzw. daß nicht nur jedes der Meßrohr V-förmig ist, sondern daß die Meßrohre auch so angeordnet sind, daß die Rohranordnung insgesamt eine V-förmige Silhouette aufweist. Alternativ zu einer mittels vier gebogenen Meßrohren gebildeten Rohranordnung kann der Meßaufnehmer - wie auch in Fig. 15 beispielhaft gezeigt - aber auch eine Rohranordnung aufweisen, die mittels vier geraden Meßrohren gebildet ist.

Zum Ansteuern der vorbezeichneten Erregeranordnung des Meßaufnehmers und zum Verarbeiten wenigstens eines der von der Sensoranordnung des Meßaufnehmers generierten Schwingungsmeßsignale, beispielsweise nämlich zum Ermitteln der vorbezeichneten, die wenigstens eine Meßgröße repräsentierenden Meßwerte, umfaßt das Meßsystem nach einer weiteren Ausgestaltung der Erfindung ferner eine mit dem Meßaufnehmer 11 elektrisch verbundene - hier nicht im einzelnen dargestellte - Umformer-Elektronik 12. Die Umformer-Elektronik 12 kann beispielsweise in einem separaten Elektronik-Gehäuse 7₂ untergebracht sein, das vom Meßaufnehmer entfernt angeordnet oder, wie in Fig. 1, 9 bzw. 13 jeweils gezeigt, unter Bildung eines Kompaktmeßgeräts direkt am Meßaufnehmer 11, beispielsweise nämlich von außen am Aufnehmer-Gehäuse 7₁, fixiert ist. Zum Haltern des Elektronik-Gehäuses 7₂ am Aufnehmer-Gehäuse 7₁ kann an dieses ein dem Haltern des Elektronik-Gehäuses 7₂ dienendes halsartiges Gehäuse-Anschlußstutzen aufweisen. Innerhalb nämlichen Gehäuse-Anschlußstutzen kann beispielsweise auch eine mittels Glas- und/oder Kunststoff hergestellte, hermetisch dichte und/oder druckfeste Durchführung für zwischen Meßaufnehmer 11, insb. nämlich dessen Schwingungserregern und -sensoren, und Umformer-Elektronik 12 verlaufende elektrische Verbindungsleitungen vorgesehen sein. Die, beispielsweise mittels einem oder mehreren Mikroprozessoren und/oder mittels eines oder mehreren digitalen Signalprozessoren gebildete, Umformer-Elektronik 12 kann z.B. ferner so ausgelegt sein, daß sie im Betrieb des Meßsystems mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem leitungsgebundenen Feldbussystem und/oder drahtlos per Funk, Meß- und/oder andere Betriebsdaten austauschen kann. Des weiteren kann die Umformer-Elektronik 12 eingerichtete sein, im Betrieb von einer externen Energieversorgung, beispielsweise auch über das vorgenannte Feldbussystem, gespeist zu werden. Für den Fall, daß das Meßsystem für eine Ankopplung an ein Feldbus- oder ein anderes Kommunikationssystem vorgesehen ist, kann die, beispielsweise auch vor Ort und/oder via Kommunikationssystem reprogrammierbare, Umformer-Elektronik 12 zu dem eine entsprechende Kommunikations-Schnittstelle für eine Datenkommunikation aufweisen, z.B. zum Senden der Meßdaten an die bereits erwähnte speicherprogrammierbare Steuerung oder ein übergeordnetes Prozeßleitsystem und/oder zum Empfangen von Einstelldaten für das Meßsystem.

Wie bereits erwähnt, werden beim Meßaufnehmer 11 die für die Messung erforderlichen Reaktionskräfte im jeweils zu messenden Fluid durch das, beispielsweise simultane, Schwingenlassen der Meßrohre 18₁, 18₂, 18₃, 18₄ im aktiv angeregten Nutzmode bewirkt. Zum Anregen von Schwingungen der Meßrohre, nicht zuletzt auch denen im Nutzmode, umfaßt der Meßaufnehmer ferner eine mittels wenigstens eines auf die Meßrohre 18₁, 18₂, 18₃, 18₄ einwirkenden elektro-mechanischen, beispielsweise elektro-dynamischen, Schwingungserregers 5₁ gebildete Erregeranordnung 5, die dazu dient jedes der Meßrohre betriebsgemäß zumindest zeitweise in für die konkrete Messung jeweils geeignete Schwingungen, insb. von Biegeschwingungen, im Nutzmode mit jeweils für die Erzeugung und die Erfassung der oben genannten Reaktionskräfte im Fluid ausreichend großen Schwingungsamplitude zu versetzen bzw. diese Nutzschwingungen aufrechtzuerhalten. Der wenigstens eine Schwingungserreger 5₁, mithin die damit gebildete Erregeranordnung dient hierbei im besonderen dazu, eine von der Umformer-Elektronik 12 - etwa mittels wenigstens eines elektrischen Treibersignals e1 - eingespeiste elektrische Erregerleistung P_{exc} in solche, z.B. pulsierenden oder harmonischen, Erregerkräfte F_{exc} zu konvertieren, die möglichst gleichzeitig, gleichmäßig jedoch gegensinnig auf wenigstens zwei die Meßrohre, etwa das erste und zweite Meßrohr, einwirken, ggf. auch von den beiden Meßrohre weiter - direkt über entsprechende, nämlich lediglich das erste Meßrohr und das dritte Meßrohr bzw. lediglich das zweite Meßrohr und das vierte Meßrohr miteinander mechanisch verbindendende Kopplerelemente und/oder indirekt über die Strömungsteiler - auf die anderen zwei Meßrohre mechanisch gekoppelt werden, und so simultane Schwingungen aller vier Meßrohre im Nutzmode bewirken. Die durch Konvertierung von in die Erregeranordnung 5 eingespeister elektrischer Erregerleistung P_{exc} generierten Erregerkräfte F_{exc} können in dem Fachmann an und für sich bekannter Weise, z.B. mittels einer in der Umformer-Elektronik 12 vorgesehenen, letztlich das Treibersignal liefernden Betriebsschaltung eingestellt werden, etwa mittels in der Betriebsschaltung implementierten Strom- und/ oder Spannungs-Reglern hinsichtlich ihrer Amplitude und, z.B. mittels einer in Betriebsschaltung gleichfalls vorgesehenen Phasen-Regelschleife (PLL), hinsichtlich ihrer Frequenz. Die Umformer-Elektronik 12 kann die für die Generierung der Erregerkräfte benötigte elektrische Erregerleistung mittels eines dem Schwingungserreger, mithin der Erregeranordnung beispielsweise via Verbindungsleitungen zugeführten und/oder zumindest zeitweise periodischen, elektrischen Treibersignals in die Erregeranordnung einspeisen, das mit wenigstens einer mit einer einer Resonanzfrequenz eines natürlichen Schwingungsmodes der Rohranordnung bzw. einer damit korrespondierenden Frequenz entsprechenden Signalfrequenz veränderlich ist. Darüberhinaus kann es ferner von Vorteil sein - etwa zwecks Anpassens der eingespeisten Erregerleistung an die momentan für eine ausreichende Schwingungsamplitude tatsächlich benötige -, das wenigstens eine Treibersignal e1 hinsichtlich einer maximalen Spannungshöhe (Spannungsamplitude) und/oder einer maximalen Stromstärke (Stromamplitude) veränderlich auszuführen.

Ziel der aktiven Anregung der Meßrohre zu Schwingungen ist es u.a., nicht zuletzt auch für den Fall, daß das mittels des Meßaufnehmers schlußendlich gebildete Meßsystem zur Messung des Massendurchflusses bzw. der Massendurchflußrate dienlich sein soll, mittels der im Nutzmode vibrierenden Meßrohre im hindurchströmendem Fluid ausreichend starke Corioliskräfte zu induzieren, so daß im Ergebnis eine zusätzliche, mithin einem Schwingungsmode höherer Ordnung der Rohranordnung - dem sogenannten Coriolismode - entsprechende Verformungen jedes der Meßrohre mit für die Messung ausreichenden Schwingungsamplituden bewirkt werden kann. Beispielsweise können dafür die Meßrohre 18₁, 18₂, 18₃, 18₄ mittels der daran gehalterten elektro-mechanischen Erregeranordnung 5 zu, insb. simultanen, Biegeschwingungen, insb. auf einer momentanen mechanischen Resonanzfrequenz der mittels der vier Meßrohre 18₁, 18₂, 18₃, 18₄ gebildeten Rohranordnung, angeregt werden, bei denen sie - zumindest überwiegend - lateral ausgelenkt und paarweise zueinander im wesentlichen gegengleich schwingen gelassen werden. Dies beispielsweise auch derart, daß von jedem der Meßrohre 18₁, 18₂, 18₃, 18₄ im Betrieb zeitgleich ausgeführten Vibrationen zumindest zeitweise und/oder zumindest anteilig jeweils als Biegeschwingungen um eine das erste und das jeweils zugehörige zweite Meßrohrende des jeweiligen Meßrohrs verbindende, zu den erwähnten Verbindungsachsen Z₁, Z₂, Z₃, Z₄ jeweils parallele gedachte Schwingungssachse ausgebildet sind, wobei die vier Schwingungssachsen gleichermaßen zueinander wie auch zu der die beiden Strömungsteiler 2₁, 2₂ imaginär verbindenden und durch einen Massenschwerpunkt des Meßaufnehmers gedachten Längsachse L des gesamten Meßaufnehmers parallel sein können. Bei mittels gebogener Meßrohre gebildeten Rohranordnungen können die Meßrohre beispielsweise jeweils zumindest abschnittsweise nach Art eines endseitig eingespannten Auslegers schwingen gelassen werden, mithin also Ausleger-Biegeschwingungen um jeweils eine zu wenigstens zwei der gedachten Verbindungsachsen Z₁, Z₂, Z₃, Z₄ parallele gedachte Schwingungsachse ausführen. Die Meßrohre 18₁, 18₂, 18₃, 18₄ mittels der Erregeranordnung 5 ferner so angerget werden, daß sie zumindest anteilig, insb. überwiegend, zu Biegeschwingungen angeregt sind, die eine Biegeschwingungsfrequenz aufweisen, die in etwa gleich einer momentanen mechanischen Resonanzfrequenz der die vier Meßrohre 18₁, 18₂, 18₃, 18₄ umfassenden Rohranordnung ist oder die zumindest in der Nähe einer solchen Resonanzfrequenz liegt bzw. einen definierten Frequenzabstand zu nämlicher Resonanzfrequenz aufweist. Die momentanen mechanischen Resonanzfrequenzen von Biegeschwingungen sind bekanntlich in besonderem Maße von Größe, Form und Material der Meßrohre 18₁, 18₂, 18₃, 18₄ aber auch von Stoffeigenschaften des durch die Meßrohre hindurchströmenden Fluids, nicht zuletzt auch dessen momentaner Dichte, abhängig und kann insoweit im Betrieb des Meßaufnehmers innerhalb eines durchaus einige Kilohertz breiten Nutz-Frequenzbandes veränderlich sein. Bei Anregung der Meßrohre auf einer momentanen Resonanzfrequenz kann somit einerseits anhand der momentan angeregten Schwingungsfrequenz eine mittlere Dichte des durch die vier Meßrohre momentane strömenden Fluids leicht ermittelt werden. Anderseits kann so auch die für die Aufrechterhaltung der im Nutzmode angeregten Schwingungen momentan erforderliche elektrische Leistung minimiert werden. Im besonderen werden die vier Meßrohre 18₁, 18₂, 18₃, 18₄, angetrieben von der Erregeranordnung 5, ferner zumindest zeitweise mit im wesentlichen gleicher Schwingungsfrequenz, insb. auf jeweils ein und derselben, insoweit einer gemeinsamen, natürlichen mechanischen Eigenfrequenz, schwingen gelassen. In vorteilhafter Weise sind das Schwingungsverhalten der mittels der vier Meßrohre 18₁, 18₂, 18₃, 18₄ gebildeten Rohranordnung wie auch die die Erregeranordnung steuernden Treibersignale ferner so aufeinander abgestimmt, daß zumindest die im Nutzmode angeregten Schwingungen der vier Meßrohre 18₁, 18₂, 18₃, 18₄ so ausgebildet sind, daß das erste und das zweite Meßrohr 18₁, 18₂ - etwa nach Art zweier Stimmgabelzinken - zueinander im wesentlichen gegengleich, mithin zumindest in der gedachten Querschnittsebene XY mit einer gegenseitigen Phasenverschiebung von etwa 180°, schwingen und auch das dritte und das vierte Meßrohr 18₃, 18₄ gleichermaßen zueinander im wesentlichen gegengleich schwingen.

Gemäß einer weiteren Ausgestaltung der Erfindung ist die Erregeranordnung 5 mittels eines, insb. differenziell, mithin simultan bzw. gegengleich auf das erste Meßrohr 18₁ und das zweite Meßrohr 18₂ wirkenden, ersten Schwingungserregers 5₁ gebildet. Der Schwingungserreger 5₁ ist im besonderen dafür eingerichtet, sowohl mechanische Schwingungen des ersten Meßrohrs als auch mechanische Schwingungen des zweiten Meßrohr, insb. differenziell und/oder simultan, anzuregen, insb. derart, daß nämliche Schwingungen des zweiten Meßrohrs gegengleich sind zu nämlichen Schwingungen des ersten Meßrohrs. Dafür kann der Schwingungserreger 5₁ beispielsweise mittels eines am ersten Meßrohr gehalterten Permanentmagneten und einer von dessen Magnetfeld durchfluteten, am zweiten Meßrohr gehalterten Zylinderspule gebildet sein, etwa nach Art einer Tauchspulenanordnung, bei der die Zylinderspule koaxial zum Permanentmagneten angeordnet und dieser als innerhalb der Spule bewegter Tauchanker ausgebildet ist, mithin kann der Schwingungserreger vom elektrodynamischen Typ sein. Zwecks Erhöhung des Wirkungsgrades der Erregeranordnung bzw. zwecks der Erhöhung der damit generierten Erregerkräfte bei gleichzeitig möglichst symmetrischem Aufbau umfaßt die Erregeranordnung nach einer Weiterbildung der Erfindung ferner einen, insb. elektrodynamischen und/oder differenziell auf das dritte Meßrohrs 18₃ und das vierte Meßrohr 18₄ wirkenden, zweiten Schwingungserreger 5₂. Der zweite Schwingungserreger 5₂ ist in vorteilhafter Weise zumindest insoweit baugleich zum ersten Schwingungserreger 5₁ ausgebildet, als er analog zu dessen Wirkprinzip arbeitet, beispielsweise also ebenfalls ein Schwingungserreger vom elektrodynamischen Typ ist. Im besonderen ist der zweite Schwingungserreger 5₂ ferner dafür eingerichtet, sowohl mechanische Schwingungen des dritten Meßrohrs als auch mechanische Schwingungen des vierten Meßrohr, insb. differenziell und/oder simultan, anzuregen, etwa derart, daß nämliche Schwingungen des vierten Meßrohrs gegengleich sind zu nämlichen Schwingungen des dritten Meßrohrs und/oder daß nämliche mittels des zweiten Schwingungserregers Schwingungen des dritten und vierten Meßrohrs unabahängig sind von den mittels des ersten Schwingungserregers angeregten Schwingungen des ersten und zweiten Meßrohrs.

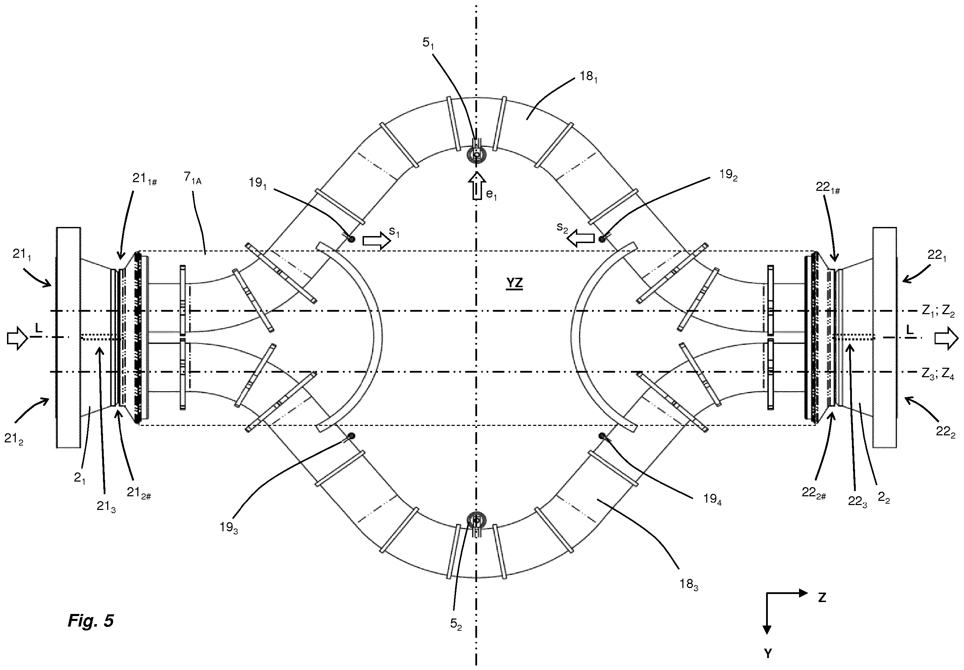

Wie in den Fig. 5, 12a bzw. 15 jeweils angedeutet, gleichwohl bei Meßaufnehmern der in Rede stehenden Art durchaus üblich, kann die erwähnte Sensoranordnung 19 ferner dafür eingerichtet sein, sowohl einlaßseitige als auch auslaßseitige Vibrationen, beispielsweise nämlich mittels der Erregeranordnung 5 angeregte Biegeschwingungen, der Meßrohre 18₁, 18₂, 18₃ bzw. 18₄ zu erfassen und in die entsprechenden Schwingungssignale s1, s2 zu wandeln, so daß diese hinsichtlich einer Phasenlage - relativ zueinander und/oder relativ zum Treibersignal - von der von der Massendurchflußrate abhängig sind. Beispielseisweise kann die Sensoranordnung 19 mittels eines, insb. elektrodynamischen und/oder zumindest Schwingungen des ersten Meßrohrs 18₁ relativ zum zweiten Meßrohr 18₂ differenziell erfassenden, einlaßseitigen ersten Schwingungssensors 19₁ sowie eines, insb. elektrodynamischen und/oder zumindest Schwingungen des ersten Meßrohrs 18₁ relativ zum zweiten Meßrohr 18₂ differentiell erfassenden, auslaßseitigen zweiten Schwingungssensors 19₂ gebildet sein, welche beiden Schwingungssensoren jeweils auf Bewegungen der Meßrohre 18₁, 18₂, 18₃, 18₄, insb. deren laterale Auslenkungen und/oder Verformungen, reagierend, das erste bzw. zweite Schwingungssignal mit den vorbezeichneten Eigenschaften bzw. Abhängigkeit von den jewieligen Meßgrößen liefern. Die beiden, beispielsweise einander baugleichen, Schwingungssensoren 19₁, 19₂ können dafür - wie aus Fig. 5 ohne weiteres ersichtlich und bei Meßaufnehmern der in Rede stehenden Art durchaus üblich - im wesentlichen äquidistant zum ersten Schwingungserreger 5₁ im Meßaufnehmer 11 plaziert sein. Überdies können die Schwingungssensoren der Sensoranordnung 19 zumindest insoweit baugleich zum wenigstens einen Schwingungserreger der Erregeranordnung 5 ausgebildet sein, als sie analog zu dessen Wirkprinzip arbeiten, beispielsweise also ebenfalls vom elektrodynamischen Typ sind. Darüberhinaus kann die Sensoranordnung 19 zudem auch mittels weiterer Schwingungssensoren, nämlich mittels eines, insb. elektrodynamischen und/oder Schwingungen des dritten Meßrohrs 18₃ relativ zum vierten Meßrohr 18₄ differenziell erfassenden, einlaßseitigen dritten Schwingungssensors 19₃ sowie eines, insb. elektrodynamischen und/oder Schwingungen des dritten Meßrohrs 18₃ relativ zum vierten Meßrohr 18₄ differenziell erfassenden, auslaßseitigen vierten Schwingungssensors 19₄ gebildet sein. Zur weiteren Verbesserung der Signalqualität wie auch zur Vereinfachung der die Meßsignale empfangenden Umformer-Elektronik 12 können desweiteren der erste und dritte Schwingungssensor 19₁, 19₃ elektrisch seriell verschaltet sein, beispielsweise derart, daß ein gemeinsames Schwingungssignal gemeinsame einlaßseitige Schwingungen des ersten und dritten Meßrohrs 18₁, 18₃ relativ zum zweiten und vierten Meßrohr 18₂, 18₄ repräsentiert. Alternativ oder in Ergänzung können auch der zweite und vierte Schwingungssensor 19₂, 19₄ derart elektrisch seriell verschaltet sein, daß ein gemeinsames Schwingungssignal beider Schwingungssensoren 19₂, 19₄ gemeinsame auslaßseitige Schwingungen des ersten und dritten Meßrohrs 18₁, 18₃ relativ zum zweiten und vierten Meßrohr 18₂, 18₄ repräsentiert.

Die Sensoranordnung 19 kann ferner, wie bei derartigen Meßaufnehmern üblich, in geeigneter Weise mit einer in der Umformer-Elektronik 12 entsprechend vorgesehenen, beispielsweise mittels wenigstens einem Mikroprozessors und/oder mittels wenigstens einem digitalen Signalprozessor gebildete, Meßschaltung gekoppelt sein, beispielsweise drahtgebunden via Verbindungsleitungen. Die Meßschaltung kann ferner dafür eingerichtet sein, die Schwingungssignale der Sensoranordnung 19 zu empfangen und daraus, ggf. auch unter Berücksichtung mittels des wenigstens einen Treibersignals in die Erregeranordnung eingespeister, mithin auch darin umgesetzter elektrischer Erregerleistung, die eingangs erwähnten Meßwerte zu genrieren, die also beispielsweise eine Massedurchflußrate, einen totalisierten Massendurchfluß und/oder eine Dichte und/oder eine Viskosität des zu messenden Fluids repräsentieren können, und die ggf. vor Ort angezeigt und/oder auch an ein dem Meßsystem übergeordnetes Datenverarbeitungssystem inform digitaler Meßdaten gesendet und daselbst entsprechend weiterverarbeitet werden können. Ferner kann nämliche Meßschaltung, mithin die damit gebildte Umformer-Elektronik dafür vorgesehen und ausgelegt sein, anhand von in der Erregeranordnung 5 umgesetzter elektrischer Erregerleistung, beispielsweise periodisch wiederkehrend und/oder auf Abruf, die erwähnten, die Viskosität des strömenden Fluids repräsentierenden Viskosität-Meßwerte zu generieren und/oder anhand von vom Meßaufnehmer gelieferten Schwingungssignalen, beispielsweise periodisch wiederkehrend und/oder auf Abruf, die erwähnten die Massendurchflußrate des strömenden Fluids repräsentierenden Massendurchfluß-Meßwerte und/oder, beispielsweise periodisch wiederkehrend und/oder auf Abruf, die die Dichte des strömenden Fluids repräsentierenden Dichte-Meßwerte zu generieren. Alternativ oder in Ergänzung kann die Meßschaltung bzw. die Umformer-Elektronik 12 ferner dafür eingerichtet sein, anhand von Schwingungssignalen und/oder unter Berücksichtung von mittels des wenigstens einen Treibersignals in die Erregeranordnung eingespeister, mithin auch darin umgesetzter elektrischer Erregerleistung einen momentanen Betriebszustand des Meßaufnehmers zu diagnostizieren bzw. festzustellen, ob oder inwieweit der Meßaufnehmer geschädigt ist. Dafür können zudem, wie bei Meßaufnehmern der in Rede stehenden Art durchaus üblich, zusätzlich zu den vorbezeichneten Schwingungssensoren weitere, insb. Hilfs- bzw. Störgrößen erfassende und/oder an die Umformer-Elektronik 12 entsprechend elektrisch angeschlossene, Sensoren im Meßaufnehmer vorgesehen sein, wie z.B. Beschleunigungssensoren zum Erfassen von durch äußere Kräfte und/oder Asymmetrien in der Rohranordnung verursachte Bewegungen des gesamten Meßsystems, Dehnungsmeßstreifen zum Erfassen von Dehnungen eines oder mehrerer der Meßrohre und/oder des Aufnehmergehäuses, Drucksensoren zum Erfassen eines im Aufnehmergehäuse herrschenden statischen Drucks und/oder Temperatursensoren zum Erfassen von Temperaturen eines oder mehrerer der Meßrohre und/oder des Aufnehmergehäuses, mittels denen beispielsweise die Funktionstüchtigkeit des Meßaufnehmers und/oder Änderungen der Empfindlichkeit des Meßsaufnehmers auf die primär zu erfassenden Meßgrößen, insb. die Massendurchflußrate und/oder die Dichte, infolge von Querempfindlichkeiten bzw. äußeren Störungen besser überwacht und ggf. entsprechend besser kompensiert werden können.

## Patentansprüche

1. Meßaufnehmer vom Vibrationstyp zum Erzeugen von von wenigstens einer physikalischen Meßgröße - insb. nämlich einer Dichte und/oder einer Massendurchflußrate und/oder einer Viskosität - eines in einer Rohrleitung strömenden Fluids abhängigen Reaktionskräften - insb. nämlich Dichte abhängigen Trägheitskräften und/oder Massendurchflußrate abhängigen Corioliskräften und/oder Viskosität abhängigen Reibungskräften -, welcher Meßaufnehmer umfaßt:
- einen ersten Strömungsteiler (2₁) mit zwei voneinander separierten, jeweils röhrenförmige, nämlich jeweils zum Führen von ein- und wieder ausströmendem Fluid eingerichtete Kammern (21₁, 21₂), von denen
-- eine erste Kammer (21₁) einen Kammerboden (21_{1#}), in den zwei voneinander beabstandet in ein Lumen nämlicher Kammer mündende Strömungsöffnungen (21_{1A}, 21_{1B}) eingeformt sind,
-- und eine zweite Kammer (21₂) einen Kammerboden (21_{2#}) in den zwei voneinander beabstandet in ein Lumen nämlicher Kammer mündende Strömungsöffnungen (21_{2A}, 21_{2B}) eingeformt sind, aufweisen;
- einen zweiten Strömungsteiler (2₂) mit zwei voneinander separierten, jeweils röhrenförmige, nämlich jeweils zum Führen von ein- und wieder ausströmendem Fluid eingerichtete Kammern (22₁, 22₂), von denen
-- eine erste Kammer (22₁) einen Kammerboden (22_{1#}), in den zwei voneinander beabstandet in ein Lumen nämlicher Kammer mündende Strömungsöffnungen (22_{1A}, 22_{1B}) eingeformt sind,
-- und eine zweite Kammer (22₂) einen Kammerboden (22_{2#}) in den zwei voneinander beabstandet in ein Lumen nämlicher Kammer mündende Strömungsöffnungen (22_{2A}, 22_{2B}) eingeformt sind, aufweisen;
- eine Rohranordnung mit mindestens vier unter Bildung strömungstechnisch parallel geschalteter Strömungspfade an die Strömungsteiler (2₁, 2₂) angeschlossenen Meßrohren (18₁, 18₂, 18₃, 18₄) zum Führen von strömendem Fluid, von denen
-- ein erstes Meßrohr (18₁) mit einem einlaßseitigen ersten Meßrohrende in eine erste Strömungsöffnung (20_{1A}) der ersten Kammer des ersten Strömungsteilers (20₁) und mit einem auslaßseitigen zweiten Meßrohrende in eine erste Strömungsöffnung (20_{2A}) der ersten Kammer des zweiten Strömungsteilers (20₂) mündet,
-- ein zweites Meßrohr (18₂) mit einem einlaßseitigen ersten Meßrohrende in eine zweite Strömungsöffnung (20_{1B}) der ersten Kammer des ersten Strömungsteilers (20₁) und mit einem auslaßseitigen zweiten Meßrohrende in eine zweite Strömungsöffnung (20_{2B}) der ersten Kammer des zweiten Strömungsteilers (20₂) mündet,
-- ein drittes Meßrohr (18₃) mit einem einlaßseitigen ersten Meßrohrende in eine erste Strömungsöffnung (20_{1C}) der zweiten Kammer des ersten Strömungsteilers (20₁) und mit einem auslaßseitigen zweiten Meßrohrende in eine erste Strömungsöffnung (20_{2C}) der zweiten Kammer des zweiten Strömungsteilers (20₂) mündet, und
-- ein viertes Meßrohr (18₄) mit einem einlaßseitigen ersten Meßrohrende in eine zweite Strömungsöffnung (20_{1D}) der zweiten Kammer des ersten Strömungsteilers (20₁) und mit einem auslaßseitigen zweiten Meßrohrende in eine zweite Strömungsöffnung (20_{2D}) der zweiten Kammer des zweiten Strömungsteilers (20₂) mündet;
- eine elektromechanische Erregeranordnung (5) zum Anregen mechanischer Schwingungen der Meßrohre;
- sowie eine Sensoranordnung (19) zum Erfassen von Schwingungsbewegungen der Meßrohre und zum Generieren sowohl eines Schwingungen wenigstens eines der Meßrohre repräsentierenden ersten Schwingungsmeßsignals (s1) als auch wenigstens eines Schwingungen wenigstens eines der Meßrohre repräsentierenden zweiten Schwingungsmeßsignals (s2).

2. Meßaufnehmer nach einem der vorherigen Ansprüche, wobei die Erregeranordnung einen ersten Schwingungserreger (5₁) aufweist, der dafür eingerichtet ist, sowohl mechanische Schwingungen des ersten Meßrohrs als auch mechanische Schwingungen des zweiten Meßrohr anzuregen.

3. Meßaufnehmer nach dem vorherigen Anspruch, wobei die Erregeranordnung einen, insb. zum ersten Schwingungserreger (5₁) baugleichen, zweiten Schwingungserreger (5₂) aufweist, der dafür eingerichtet ist, sowohl mechanische Schwingungen des dritten Meßrohrs als auch mechanische Schwingungen des vierten Meßrohr anzuregen.

4. Meßaufnehmer nach einem der vorherigen Ansprüche,
- wobei der erste Strömungsteiler (20₁) einen Flansch (6₁) zum Anschließen des Meßaufnehmers an ein erstes Rohrsegment einer Rohrleitung aufweist
- und wobei der zweite Strömungsteiler (20₂) einen Flansch (6₂) zum Anschließen des Meßaufnehmers an ein zweites Rohrsegment nämlicher Rohrleitung aufweist.

5. Meßaufnehmer nach einem der vorherigen Ansprüche,
- wobei die in den Kammerboden (21_{1#}) der ersten Kammer (21₁) des ersten Strömungsteilers (2₁) eingeformten Strömungsöffnungen (21_{1A}, 21_{1B}) und die in den Kammerboden (21_{2#}) der zweiten Kammer (21₂) des ersten Strömungsteilers (2₁) eingeformten Strömungsöffnungen (21_{2A}, 21_{2B}) so angeordnet sind,
-- daß ein minimaler Abstand zwischen den in den Kammerboden (21_{1#}) der ersten Kammer (21₁) des ersten Strömungsteilers (2₁) eingeformten Strömungsöffnungen (21_{1A}, 21_{1B}) gleich einem minimalen Abstand zwischen den in den Kammerboden (21_{2#}) der zweiten Kammer (21₂) des ersten Strömungsteilers (2₁) eingeformten Strömungsöffnungen (21_{2A}, 21_{2B}) ist und/oder
-- daß ein minimaler Abstand zwischen der in den Kammerboden (21_{1#}) der ersten Kammer (21₁) des ersten Strömungsteilers (2₁) eingeformten ersten Strömungsöffnung (21_{1A}) und der in den Kammerboden (21_{2#}) der zweiten Kammer (21₂) des ersten Strömungsteilers (2₁) eingeformten ersten Strömungsöffnung (21_{2A}) gleich einem minimalen Abstand zwischen der in den Kammerboden (21_{1#}) der ersten Kammer (21₁) des ersten Strömungsteilers (2₁) eingeformten zweiten Strömungsöffnung (21_{1B}) und der in den Kammerboden (21_{2#}) der zweiten Kammer (21₂) des ersten Strömungsteilers (2₁) eingeformten zweiten Strömungsöffnung (21_{2B}) ist; und/oder
- wobei die in den Kammerboden (22_{1#}) der ersten Kammer (22₁) des zweiten Strömungsteilers (2₂) eingeformten Strömungsöffnungen (22_{1A}, 22_{1B}) und die in den Kammerboden (21_{2#}) der zweiten Kammer (22₂) des zweiten Strömungsteilers (2₂) eingeformten Strömungsöffnungen (22_{2A}, 22_{2B}) so angeordnet sind,
-- daß ein minimaler Abstand zwischen den in den Kammerboden (22_{1#}) der ersten Kammer (22₁) des zweiten Strömungsteilers (2₂) eingeformten Strömungsöffnungen (22_{1A}, 22_{1B}) gleich einem minimalen Abstand zwischen den in den Kammerboden (22_{2#}) der zweiten Kammer (22₂) des zweiten Strömungsteilers (2₂) eingeformten Strömungsöffnungen (22_{2A}, 22_{2B}) ist und/oder
-- daß ein minimaler Abstand zwischen der in den Kammerboden (22_{1#}) der ersten Kammer (22₁) des zweiten Strömungsteilers (2₂) eingeformten ersten Strömungsöffnung (22_{1A}) und der in den Kammerboden (22_{2#}) der zweiten Kammer (22₂) zweiten Strömungsteilers (2₂) eingeformten ersten Strömungsöffnung (22_{2A}) gleich einem minimalen Abstand zwischen der in den Kammerboden (22_{1#}) der ersten Kammer (22₁) des zweiten Strömungsteilers (2₂) eingeformten zweiten Strömungsöffnung (22_{1B}) und der in den Kammerboden (22_{2#}) der zweiten Kammer (22₂) des zweiten Strömungsteilers (2₂) eingeformten zweiten Strömungsöffnung (22_{2B}) ist.

6. Meßaufnehmer nach einem der vorherigen Ansprüche, weiters umfassend:
- ein Aufnehmer-Gehäuse (7₁), von dem ein erstes Gehäuseende mittels des ersten Strömungsteilers (2₁) und ein zweites Gehäuseende mittels des +zweiten Strömungsteilers (2₂) gebildet sind,
- wobei das Aufnehmer-Gehäuse eine Kavität aufweist, innerhalb der die Rohranordnung, die Erregeranordnung sowie die Sensoranordnung plaziert sind.

7. Meßaufnehmer nach dem vorherigen Anspruch, wobei sowohl der erste Strömungsteiler (2₁) als auch der zweite Strömungsteiler (2₂) integraler Bestandteil des Aufnehmer-Gehäuses (7₁) sind.

8. Meßaufnehmer nach einem der vorherigen Ansprüche,
- wobei der erste Strömungsteiler
-- einen sich von einem proximalen, nämlich sowohl an eine äußere Randzone des Kammerbodens der zugehörigen ersten Kammer als auch an eine äußere Randzone des Kammerbodens der zugehörigen zweiten Kammer grenzenden Stutzende bis zu einem distalen, nämlich sowohl vom Kammerboden der zugehörigen ersten Kammer als auch vom Kammerboden der zugehörigen zweiten Kammer entfernten Stutzende erstreckenden Anschlußstutzen
-- sowie eine innerhalb eines Lumens nämlichen Anschlußstutzens angeordnete, sich von einem proximalen, nämlich sowohl an eine innere Randzone des Kammerbodens der zugehörigen ersten Kammer als auch an eine innere Randzone des Kammerbodens der zugehörigen zweiten Kammer grenzenden Wandende bis zu einem distalen, nämlich sowohl vom Kammerboden der ersten Kammer als auch vom Kammerboden der zweiten Kammer entfernten Wandende erstreckenden Zwischenwand mit einem den Anschlußstutzen kontaktierenden ersten Seitenrand und einem den Anschlußstutzen kontaktierenden zweiten Seitenrand aufweist; und
- wobei der zweite Strömungsteiler
-- einen sich von einem proximalen, nämlich sowohl an eine äußere Randzone des Kammerbodens der zugehörigen ersten Kammer als auch an eine äußere Randzone des Kammerbodens der zugehörigen zweiten Kammer grenzenden Stutzende bis zu einem distalen, nämlich sowohl vom Kammerboden der zugehörigen ersten Kammer als auch vom Kammerboden der zugehörigen zweiten Kammer entfernten Stutzende erstreckenden Anschlußstutzen
-- sowie eine innerhalb eines Lumens nämlichen Anschlußstutzens angeordnete, sich von einem proximalen, nämlich sowohl an eine innere Randzone des Kammerbodens der zugehörigen ersten Kammer als auch an eine innere Randzone des Kammerbodens der zugehörigen zweiten Kammer grenzenden Wandende bis zu einem distalen, nämlich sowohl vom Kammerboden der ersten Kammer als auch vom Kammerboden der zweiten Kammer entfernten Wandende erstreckenden Zwischenwand mit einem den Anschlußstutzen kontaktierenden ersten Seitenrand und einem den Anschlußstutzen kontaktierenden zweiten Seitenrand aufweist.

9. Meßaufnehmer nach einem der vorherigen Ansprüche,
- wobei die Rohranordnung wenigstens zwei zueinander senkrechte gedachte Symmetrieebenen aufweist, bezüglich welcher Symmetrieebenen die Rohranordnung jeweils spiegelsymmetrisch ist; und/oder
- wobei die Rohranordnung zwei gedachte Rohrebenen aufweist, von denen eine erste gedachte Rohrebene imaginär sowohl das erste Meßrohr als auch das dritte Meßrohr längs schneidet und eine zweite gedachte Rohrebene imaginär sowohl das zweite Meßrohr als auch das vierte Meßrohr längs schneidet; und/oder
- wobei die Meßrohre lediglich paarweise baugleich sind; und/oder
- wobei ein Kaliber des ersten Meßrohrs gleich einem Kaliber des zweiten Meßrohrs und ein Kaliber des dritten Meßrohrs gleich einem Kaliber des vierten Meßrohrs sind, insb. derart, daß das Kaliber des ersten Meßrohrs auch gleich dem Kaliber des dritten Meßrohrs bzw. das Kaliber des zweiten Meßrohrs auch gleich dem Kaliber des vierten Meßrohrs ist.

10. Meßaufnehmer nach einem der vorherigen Ansprüche, wobei jedes der Meßrohre jeweils wenigstens ein gebogenes Rohrsegment aufweist.

11. Meßaufnehmer nach dem vorherigen Anspruch, wobei die Meßrohre so geformt und angeordnet sind, daß das wenigstens eine gebogene Rohrsegment jedes der Meßrohre jeweils parallel zu dem wenigsten einen gebogenen Rohrsegment jedes der jeweils anderen Meßrohre ist.

12. Meßaufnehmer nach einem der vorherigen Ansprüche,
- wobei jedes der Meßrohre V-förmig ist
- und wobei die Meßrohre so angeordnet sind, daß das die Rohranordnung eine V-förmige Silhouette aufweist.

13. Meßaufnehmer nach einem der vorherigen Ansprüche, wobei jedes der Meßrohre jeweils drei gebogene Rohrsegmente aufweist, insb. derart, daß zwei jeweils benachbarte gebogene Rohrsegmente des jeweiligen Meßrohrs jeweils über ein dazwischen befindliches gerades Rohrsegment nämlichen Meßrohrs miteinander verbunden sind.

14. Meßsystem zum von Messen wenigstens einer physikalischen Meßgröße - insb. nämlich einer Dichte und/oder einer Massendurchflußrate und/oder einer Viskosität - eines in einer Rohrleitung strömenden Fluids, insb. nämlich einer Flüssigkeit, eines Gases oder einer Dispersion, welches Meßsystem umfaßt:
- einen Meßaufnehmer (11) gemäß einem der vorherigen Ansprüche;
- sowie eine mit nämlichem Meßaufnehmer (11) elektrisch verbundene Umformer-Elektronik (12) zum Ansteuern der Erregeranordnung (5) des Meßaufnehmers und zum Verarbeiten wenigstens eines der von der Sensoranordnung (19) des Meßaufnehmers generierten Schwingungsmeßsignale (s1, s2), insb. nämlich zum Ermitteln von die wenigstens eine Meßgröße repräsentierenden Meßwerten.

## Claims

1. Vibronic-type sensor designed to generate reaction forces depending on at least one physical measured variable - particularly a density and/or a mass flow rate and/or a viscosity - of a fluid flowing through a pipe - particularly forces of inertia dependant on the density and/or Coriolis forces dependent on the mass flow rate and/or friction forces dependent on the viscosity - said sensor comprising:
- a first flow divider (2₁) with two tubular chambers (21₁, 21₂) which are separated from one another, particularly designed to conduct fluid entering and leaving, wherein of said chambers
-- a first chamber (21₁) has a chamber floor (21_{1#}) in which two flow openings (21_{1A}, 21_{1B}) are formed, which are spaced at a distance from one another and enter into an interior channel of said chamber,
-- and a second chamber (21₂) has a chamber floor (21_{2#}) in which two flow openings (21_{2A}, 21_{2B}) are formed, which are spaced at a distance from one another and enter into an interior channel of said chamber;
- a second flow divider (2₂) with two tubular chambers (22₁, 22₂) which are separated from one another, particularly designed to conduct fluid entering and leaving, wherein of said chambers
-- a first chamber (22₁) has a chamber floor (22_{1#}) in which two flow openings (22_{1A}, 22_{1B}) are formed, which are spaced at a distance from one another, and enter into an interior channel of said chamber,
-- and a second chamber (22₂) has a chamber floor (22_{2#}) in which two flow openings (22_{2A}, 22_{2B}) are formed, which are spaced at a distance from one another, and enter into an interior channel of said chamber;
- a tube arrangement with at least four measuring tubes (18₁, 18₂, 18₃, 18₄) which are connected to the flow dividers (2₁, 2₂), forming flow paths which are switched in parallel in terms of flow, wherein said tubes are designed to conduct flowing fluid, wherein
-- a first measuring tube (18₁) enters into a first flow opening (20_{1A}) of the first chamber of the first flow divider (20₁) with a first measuring tube end on the inlet side and enters into a first flow opening (20_{2A}) of the first chamber of the second flow divider (20₂) with a second measuring tube end on the outlet side,
-- a second measuring tube (18₂) enters into a second flow opening (20_{1B}) of the first chamber of the first flow divider (20₁) with a first measuring tube end on the inlet side and enters into a second flow opening (20_{2B}) of the first chamber of the second flow divider (20₂) with a second measuring tube end on the outlet side,
-- a third measuring tube (18₃) enters into a first flow opening (20_{1C}) of the second chamber of the first flow divider (20₁) with a first measuring tube end on the inlet side and enters into a first flow opening (20_{2C}) of the second chamber of the second flow divider (20₂) with a second measuring tube end on the outlet side, and
-- a fourth measuring tube (18₄) enters into a second flow opening (20_{1D}) of the second chamber of the first flow divider (20₁) with a first measuring tube end on the inlet side and enters into a second flow opening (20_{2D}) of the second chamber of the second flow divider (20₂) with a second measuring tube end on the outlet side;
- an electromechanical exciter arrangement (5) for exciting mechanical vibrations of the measuring tubes ;
- as well as a sensor arrangement (19) designed to record vibration movements of the measuring tubes and to generate both a first vibration measuring signal (s1) representing vibrations of at least one of the measuring tubes and a second vibration measuring signal (s2) representing vibrations of at least one of the measuring tubes.

2. Sensor as claimed in the previous claim, wherein the exciter arrangement has a first vibration exciter (5₁), which is designed to excite both mechanical vibrations of the first measuring tube and mechanical vibrations of the second measuring tube.

3. Sensor as claimed in the previous claim, wherein the exciter arrangement has a second vibration exciter (5₂), particularly identical in design to the first vibration exciter (5₁), wherein said second exciter is designed to excite both mechanical vibrations of the third measuring tube and mechanical vibrations of the fourth measuring tube.

4. Sensor as claimed in one of the previous claims,
- wherein the first flow divider (20₁) has a flange (6₁) for connecting the sensor to a first tube segment of a pipe
- and wherein the second flow divider (20₂) has a flange (6₂) for connecting the sensor to a second tube segment of a pipe.

5. Sensor as claimed in one of the previous claims,
- wherein the flow openings (21_{1A}, 21_{1B}) formed in the chamber floor (21_{1#}) of the first chamber (21₁) of the first flow divider (2₁) and the flow openings (21_{2A}, 21_{2B}) formed in the chamber floor (21_{2#}) of the second chamber (21₂) of the first flow divider (2₁) are arranged in such a way that
-- a minimum distance between the flow openings (21_{1A}, 21_{1B}) formed in the chamber floor (21_{1#}) of the first chamber (21₁) of the first flow divider (2₁) is equal to a minimum distance between the flow openings (21_{2A}, 21_{2B}) formed in the chamber floor (21_{2#}) of the second chamber (21₂) of the first flow divider (2₁), and/or
-- a minimum distance between the first flow opening (21_{1A}) formed in the chamber floor (21_{1#}) of the first chamber (21₁) of the first flow divider (2₁) and the first flow opening (21_{2A}) formed in the chamber floor (21_{2#}) of the second chamber (21₂) of the first flow divider (2₁) is equal to a minimum distance between the second flow opening (21_{1B}) formed in the chamber floor (21_{1#}) of the first chamber (21₁) of the first flow divider (2₁) and the second flow opening (21_{2B}) formed in the chamber floor (21_{2#}) of the second chamber (21₂) of the first flow divider (2₁) ; and/or
- wherein the flow openings (22_{1A}, 22_{1B}) formed in the chamber floor (22_{1#}) of the first chamber (22₁) of the second flow divider (2₂) and the flow openings (22_{2A}, 22_{2B}) formed in the chamber floor (22_{2#}) of the second chamber (22₂) of the second flow divider (2₂) are arranged in such a way that
-- a minimum distance between the flow openings (22_{1A}, 22_{1B}) formed in the chamber floor (22_{1#}) of the first chamber (22₁) of the second flow divider (2₂) is equal to a minimum distance between the flow openings (22_{2A}, 22_{2B}) formed in the chamber floor (22_{2#}) of the second chamber (22₂) of the second flow divider (2₂), and/or
-- a minimum distance between the first flow opening (22_{1A}) formed in the chamber floor (22_{1#}) of the first chamber (22₁) of the second flow divider (2₂) and the first flow opening (22_{2A}) formed in the chamber floor (22_{2#}) of the second chamber (22₂) of the second flow divider (2₂) is equal to a minimum distance between the second flow opening (22_{1B}) formed in the chamber floor (22_{1#}) of the first chamber (22₁) of the second flow divider (2₂) and the second flow opening (22_{2B}) formed in the chamber floor (22_{2#}) of the second chamber (22₂) of the second flow divider (2₂).

6. Sensor as claimed in one of the previous claims, further comprising:
- a sensor housing (7₁) of which a first housing end is formed by means of the first flow divider (2₁) and a second housing end is formed by means of the second flow divider (2₂),
- wherein the sensor housing has a cavity with which the tube arrangement, the exciter arrangement and the sensor arrangement are placed.

7. Sensor as claimed in the previous claim, wherein both the first flow divider (2₁) and the second flow divider (2₂) are an integral part of the sensor housing (7₁).

8. Sensor as claimed in one of the previous claims,
- wherein the first flow divider
-- has a connection socket extending from a proximal end of the socket, particularly adjoining both an outer marginal zone of the floor of the associated first chamber and an outer marginal zone of the floor of the associated second chamber up to a distal end of the socket, particularly distanced from both the floor of the associated first chamber and the floor of the associated second chamber
-- as well as an intermediate wall arranged in an interior channel of said connection socket, extending from a proximal end of the wall, particularly adjoining both an inner marginal zone of the floor of the associated first chamber and an inner marginal zone of the floor of the associated second chamber, up to a distal end of the wall, particularly distanced from both the floor of the first chamber and from the floor of the second chamber, wherein said intermediate wall has a first side edge in contact with the connection socket and a second side edge in contact with the connection socket; and
- wherein the second flow divider
-- has a connection socket extending from a proximal end of the socket, particularly adjoining both an outer marginal zone of the floor of the associated first chamber and an outer marginal zone of the floor of the associated second chamber up to a distal end of the socket, particularly distanced from both the floor of the associated first chamber and the floor of the associated second chamber
-- as well as an intermediate wall arranged in an interior channel of said connection socket, extending from a proximal end of the wall, particularly adjoining both an inner marginal zone of the floor of the associated first chamber and an inner marginal zone of the floor of the associated second chamber, up to a distal end of the wall, particularly distanced from both the floor of the first chamber and from the floor of the second chamber, wherein said intermediate wall has a first side edge in contact with the connection socket and a second side edge in contact with the connection socket.

9. Sensor as claimed in one of the previous claims,
- wherein the tube arrangement has at least two imaginary symmetrical planes perpendicular to one another, wherein the tube arrangement is in mirror symmetry in relation to said symmetrical planes; and/or
- wherein the tube arrangement has two imaginary tube planes, of which a first imaginary tube plane longitudinally cuts in an imaginary manner both the first measuring tube and the third measuring tube and a second imaginary tube plane longitudinally cuts in an imaginary manner both the second measuring tube and the fourth measuring tube
- wherein the measuring tubes are only identical in design in pairs; and/or
- wherein a caliber of the first measuring tube is equal to a caliber of the second measuring tube and a caliber of the third measuring tube is equal to a caliber of the fourth measuring tube, particularly in such a way that the caliber of the first measuring tube is also equal to the caliber of the third measuring tube and that the caliber of the second measuring tube is also equal to the caliber of the fourth measuring tube.

10. Sensor as claimed in one of the previous claims, wherein each of the measuring tubes has at least one curved tube segment in each case.

11. Sensor as claimed in the previous claim, wherein the measuring tubes are formed and arranged in such a way that the at least one curved tube segment of each of the measuring tubes is parallel to the at least one curved tube segment of each of the other measuring tubes.

12. Sensor as claimed in the previous claim,
- wherein each of the measuring tubes is V-shaped
- and wherein the measuring tubes are arranged in such a way that the tube arrangement has a V-shaped silhouette.

13. Sensor as claimed in one of the previous claims, wherein each of the measuring tubes has three curved tube segments, particularly in such a way that two adjacent curved tube segments of the measuring tube are interconnected via a straight tube segment, arranged between the segments, of said measuring tube.

14. Measuring system designed to measure at least one physical measured variable
- particularly a density and/or a mass flow rate and/or a viscosity - of a fluid flowing through a pipe, particularly of a liquid, a gas or a dispersion, said measuring system comprising:
- a sensor (11) as claimed in one of the previous claims;
- as well as a transmitter electronics unit (12) electrically connected to said sensor (11), said electronics unit being designed to control the exciter arrangement (5) of the sensor and to process at least one of the vibration measuring signals (s1, s2) generated by the sensor arrangement (19) of the sensor, particularly with a view to determining measured values representing the at least one measured variable.

## Revendications

1. Capteur du type à vibrations destiné à la génération de forces de réaction dépendant d'au moins une grandeur de mesure physique - notamment d'une densité et/ou d'un débit massique et/ou d'une viscosité - d'un fluide s'écoulant dans une conduite - notamment des forces d'inertie dépendant de la densité et/ou des forces de Coriolis dépendant du débit massique et/ou de des forces de frottement dépendant de la viscosité - lequel capteur comprend :
- un premier diviseur d'écoulement (2₁) avec deux chambres (21₁, 21₂) séparées l'une de l'autre, toutes deux en forme de tube, notamment destinées à acheminer le fluide entrant et sortant, chambres parmi lesquelles
-- une première chambre (21₁) présente un fond de chambre (21_{1#}), dans lequel sont formées deux ouvertures d'écoulement (21_{1A}, 21_{1B}), espacées l'une de l'autre, débouchant dans un canal intérieur de ladite chambre,
-- une deuxième chambre (21₂) présente un fond de chambre (21_{2#}), dans lequel sont formées deux ouvertures d'écoulement (21_{2A}, 21_{2B}), espacées l'une de l'autre, débouchant dans un canal intérieur de ladite chambre ;
- un deuxième diviseur d'écoulement (2₂) avec deux chambres (22₁, 22₂) séparées l'une de l'autre, toutes deux en forme de tube, notamment destinées à acheminer le fluide entrant et sortant, chambres parmi lesquelles
-- une première chambre (22₁) présente un fond de chambre (22_{1#}), dans lequel sont formées deux ouvertures d'écoulement (22_{1A}, 22_{1B}), espacées l'une de l'autre, débouchant dans un canal intérieur de ladite chambre,
-- une deuxième chambre (22₂) présente un fond de chambre (22_{2#}), dans lequel sont formées deux ouvertures d'écoulement (22_{2A}, 22_{2B}), espacées l'une de l'autre, débouchant dans un canal intérieur de ladite chambre ;
- un agencement de tubes avec au moins quatre tubes de mesure (18₁, 18₂, 18₃, 18₄) raccordés aux diviseurs d'écoulement (2₁, 2₂), formant des chemins d'écoulement parallèles, lesquels tubes sont destinés à guider le fluide en écoulement, parmi lesquels
-- un premier tube (18₁) débouche avec une première extrémité de tube de mesure côté entrée dans une première ouverture d'écoulement (20_{1A}) de la première chambre du premier diviseur d'écoulement (20₁) et avec une deuxième extrémité de tube de mesure côté sortie dans une première ouverture d'écoulement (20_{2A}) de la première chambre du deuxième diviseur d'écoulement (20₂),
-- un deuxième tube (18₂) débouche avec une première extrémité de tube de mesure côté entrée dans une deuxième ouverture d'écoulement (20_{1B}) de la première chambre du premier diviseur d'écoulement (20₁) et avec une deuxième extrémité de tube de mesure côté sortie dans une deuxième ouverture d'écoulement (20_{2B}) de la première chambre du deuxième diviseur d'écoulement (20₂),
-- un troisième tube (18₃) débouche avec une première extrémité de tube de mesure côté entrée dans une première ouverture d'écoulement (20_{1C}) de la deuxième chambre du premier diviseur d'écoulement (20₁) et avec une deuxième extrémité de tube de mesure côté sortie dans une première ouverture d'écoulement (20_{2C}) de la deuxième chambre du deuxième diviseur d'écoulement (20₂), et
-- un quatrième tube (18₄) débouche avec une première extrémité de tube de mesure côté entrée dans une deuxième ouverture d'écoulement (20_{1D}) de la deuxième chambre du premier diviseur d'écoulement (20₁) et avec une deuxième extrémité de tube de mesure côté sortie dans une deuxième ouverture d'écoulement (20_{2D}) de la deuxième chambre du deuxième diviseur d'écoulement (20₂) ;
- un circuit d'excitation électromécanique (5) destiné à faire entrer en vibrations mécaniques les tubes de mesure ;
- ainsi qu'un circuit de détection (19) destiné à mesurer les mouvements de vibration des tubes de mesure et à générer à la fois un premier signal de mesure de vibration (s1) représentant les vibrations d'au moins l'un des tubes de mesure et un deuxième signal de mesure de vibration (s2) représentant les vibrations d'au moins l'un des tubes de mesure.

2. Capteur selon la revendication précédente, pour lequel le circuit d'excitation comporte un premier excitateur de vibrations (5₁), lequel est conçu de telle sorte à faire entrer en vibrations mécaniques à la fois le premier tube de mesure et le deuxième tube de mesure.

3. Capteur selon la revendication précédente, pour lequel le circuit d'excitation comporte un deuxième excitateur de vibrations (5₂), notamment de conception identique au premier excitateur de vibrations (5₁), lequel deuxième excitateur est conçu de telle sorte à faire entrer en vibrations mécaniques à la fois le troisième tube de mesure et le quatrième tube de mesure.

4. Capteur selon l'une des revendications précédentes,
- pour lequel le premier diviseur d'écoulement (20₁) comporte une bride (6₁) destinée au raccordement du capteur à un premier segment de tube d'une conduite
- et pour lequel le deuxième diviseur d'écoulement (20₂) comporte une bride (6₂) destinée au raccordement du capteur à un deuxième segment de tube d'une conduite.

5. Capteur selon l'une des revendications précédentes,
- pour lequel les ouvertures d'écoulement (21_{1A}, 21_{1B}) formées dans le fond de chambre (21_{1#}) de la première chambre (21₁) du premier diviseur d'écoulement (2₁) et les ouvertures d'écoulement (21_{2A}, 21_{2B}) formées dans le fond de chambre (21_{2#}) de la deuxième chambre (21₂) du premier diviseur d'écoulement (2₁) sont disposées de telle sorte
-- qu'une distance minimale entre les ouvertures d'écoulement (21_{1A}, 21_{1B}) formées dans le fond de chambre (21_{1#}) de la première chambre (21₁) du premier diviseur d'écoulement (2₁) est égale à une distance minimale entre les ouvertures d'écoulement (21_{2A}, 21_{2B}) formées dans le fond de chambre (21_{2#}) de la deuxième chambre (21₂) du premier diviseur d'écoulement (2₁), et/ou
-- qu'une distance minimale entre la première ouverture d'écoulement (21_{1A}) formée dans le fond de chambre (21_{1#}) de la première chambre (21₁) du premier diviseur d'écoulement (2₁) et la première ouverture d'écoulement (21_{2A}) formée dans le fond de chambre (21_{2#}) de la deuxième chambre (21₂) du premier diviseur d'écoulement (2₁) est égale à une distance minimale entre la deuxième ouverture d'écoulement (21_{1B}) formée dans le fond de chambre (21_{1#}) de la première chambre (21₁) du premier diviseur d'écoulement (2₁) et la deuxième ouverture d'écoulement (21_{2B}) formée dans le fond de chambre (21_{2#}) de la deuxième chambre (21₂) du premier diviseur d'écoulement (2₁) ; et/ou
- pour lequel les ouvertures d'écoulement (22_{1A}, 22_{1B}) formées dans le fond de chambre (22_{1#}) de la première chambre (22₁) du deuxième diviseur d'écoulement (2₂) et les ouvertures d'écoulement (22_{2A}, 22_{2B}) formées dans le fond de chambre (22_{2#}) de la deuxième chambre (22₂) du deuxième diviseur d'écoulement (2₂) sont disposées de telle sorte
-- qu'une distance minimale entre les ouvertures d'écoulement (22_{1A}, 22_{1B}) formées dans le fond de chambre (22_{1#}) de la première chambre (22₁) du deuxième diviseur d'écoulement (2₂) est égale à une distance minimale entre les ouvertures d'écoulement (22_{2A}, 22_{2B}) formées dans le fond de chambre (22_{2#}) de la deuxième chambre (22₂) du deuxième diviseur d'écoulement (2₂), et/ou
-- qu'une distance minimale entre la première ouverture d'écoulement (22_{1A}) formée dans le fond de chambre (22_{1#}) de la première chambre (22₁) du deuxième diviseur d'écoulement (2₂) et la première ouverture d'écoulement (22_{2A}) formée dans le fond de chambre (22_{2#}) de la deuxième chambre (22₂) du deuxième diviseur d'écoulement (2₂) est égale à une distance minimale entre la deuxième ouverture d'écoulement (22_{1B}) formée dans le fond de chambre (22_{1#}) de la première chambre (22₁) du deuxième diviseur d'écoulement (2₂) et la deuxième ouverture d'écoulement (22_{2B}) formée dans le fond de chambre (22_{2#}) de la deuxième chambre (22₂) du deuxième diviseur d'écoulement (2₂).

6. Capteur selon l'une des revendications précédentes, comprenant en outre :
- un boîtier de capteur (7₁) duquel une première extrémité de boîtier est formée au moyen du premier diviseur d'écoulement (2₁) et une deuxième extrémité de boîtier est formée au moyen du deuxième diviseur d'écoulement (2₂),
- pour lequel le boîtier de capteur présente une cavité, au sein de laquelle le circuit d'excitation ainsi que le circuit de détection sont placés.

7. Capteur selon la revendication précédente, pour lequel à la fois le premier diviseur d'écoulement (2₁) et le deuxième diviseur d'écoulement (2₂) font partie intégrante du boîtier de capteur (7₁).

8. Capteur selon l'une des revendications précédentes,
- pour lequel le premier diviseur d'écoulement
-- comprend un raccord s'étendant depuis une extrémité proximale du raccord, notamment contiguë à la fois à une zone marginale extérieure du fond de la première chambre associée et à une zone marginale extérieure du fond de la deuxième chambre associée, jusqu'à une extrémité distale du raccord, notamment éloignée à la fois du fond de la première chambre associée et du fond de la deuxième chambre associée
-- ainsi qu'une paroi intermédiaire disposée dans un canal intérieur dudit raccord, s'étendant depuis une extrémité proximale de la paroi, notamment contiguë à la fois à une zone marginale intérieure du fond de la première chambre associée et à une zone marginale intérieure du fond de la deuxième chambre associée, jusqu'à une extrémité distale de la paroi, notamment éloignée à la fois du fond de la première chambre associée et du fond de la deuxième chambre associée, paroi intermédiaire dont un premier bord latéral est en contact avec le raccord et un deuxième bord latéral est en contact avec le raccord ; et
- pour lequel le deuxième diviseur d'écoulement
-- comprend un raccord s'étendant depuis une extrémité proximale du raccord, notamment contiguë à la fois à une zone marginale extérieure du fond de la première chambre associée et à une zone marginale extérieure du fond de la deuxième chambre associée, jusqu'à une extrémité distale du raccord, notamment éloignée à la fois du fond de la première chambre associée et du fond de la deuxième chambre associée
-- ainsi qu'une paroi intermédiaire disposée dans un canal intérieur dudit raccord, s'étendant depuis une extrémité proximale de la paroi, notamment contiguë à la fois à une zone marginale intérieure du fond de la première chambre associée et à une zone marginale intérieure du fond de la deuxième chambre associée, jusqu'à une extrémité distale de la paroi, notamment éloignée à la fois du fond de la première chambre associée et du fond de la deuxième chambre associée, paroi intermédiaire dont un premier bord latéral est en contact avec le raccord et un deuxième bord latéral est en contact avec le raccord.

9. Capteur selon l'une des revendications précédentes,
- pour lequel l'agencement de tubes présente au moins deux plans de symétrie imaginaires perpendiculaires l'un par rapport à l'autre, plans de symétrie par rapport auxquels l'agencement de tubes est en symétrie miroir ; et/ou
- pour lequel l'agencement de tubes présente deux plans de tube imaginaires, parmi lesquels un premier plan de tube imaginaire coupe dans le sens longitudinal à la fois le premier tube de mesure et le troisième tube de mesure et un deuxième plan de tube imaginaire coupe dans le sens longitudinal à la fois le deuxième tube de mesure et le quatrième tube de mesure
- pour lequel les tubes de mesure sont uniquement de conception identique par paires ; et/ou
- pour lequel un calibre du premier tube de mesure est égal à un calibre du deuxième tube de mesure et un calibre du troisième tube de mesure est égal à un calibre du quatrième tube de mesure, notamment de telle sorte que le calibre du premier tube de mesure est en même temps égal au calibre du troisième tube de mesure et que le calibre du deuxième tube de mesure est en même temps égal au calibre du quatrième tube de mesure.

10. Capteur selon l'une des revendications précédentes, pour lequel chacun des tubes de mesure présente respectivement un segment de tube coudé.

11. Capteur selon la revendication précédente, pour lequel les tubes de mesure sont formés et disposés de telle sorte que l'au moins un segment de tube coudé de chacun des tubes de mesure est parallèle à l'au moins un segment de tube coudé de chacun des autres tubes de mesure.

12. Capteur selon la revendication précédente,
- pour lequel chacun des tubes de mesure est en forme de V
- et pour lequel les tubes de mesure sont disposés de telle sorte que l'agencement de tubes présente une silhouette en forme de V.

13. Capteur selon l'une des revendications précédentes, pour lequel chacun des tubes de mesure présente respectivement trois segments de tube coudés, notamment de telle sorte que deux segments de tube coudés voisins du tube de mesure respectif sont reliés par l'intermédiaire d'un segment de tube droit, interposé entre eux, du même tube de mesure.

14. Système de mesure destiné à la mesure d'au moins une grandeur de mesure physique - notamment une densité et/ou un débit massique et/ou une viscosité - d'un fluide s'écoulant dans une conduite, notamment d'un liquide, d'un gaz ou d'une dispersion, lequel système de mesure comprend :
- un capteur (11) selon l'une des revendications précédentes ;
- ainsi qu'une électronique de transmetteur (12) reliée électriquement avec le dit capteur (11), laquelle électronique est destinée à commander le circuit d'excitation (5) du capteur et à traiter au moins l'un des signaux de mesure de vibration (s1, s2) générés par le circuit de détection (19) du capteur, notamment en vue de déterminer des valeurs mesurées représentant l'au moins une grandeur de mesure.
